(19) Europäisches Patentamt
European Patent Office
Office européen des brevets

(11) **EP 4 518 359 A1**

(12) **EUROPEAN PATENT APPLICATION**
published in accordance with Art. 153(4) EPC

(43) Date of publication:
05.03.2025 Bulletin 2025/10

(51) International Patent Classification (IPC):
*H04W 4/02* (2018.01)

(21) Application number: 23795129.8

(52) Cooperative Patent Classification (CPC):
H04L 5/00; H04W 4/02; H04W 4/40; H04W 56/00; H04W 64/00

(22) Date of filing: 19.04.2023

(86) International application number:
PCT/CN2023/089168

(87) International publication number:
WO 2023/207696 (02.11.2023 Gazette 2023/44)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 27.04.2022 CN 202210459542

(71) Applicant: **Datang Mobile Communications Equipment Co., Ltd.**
**Beijing 100085 (CN)**

(72) Inventors:
• **REN, Bin**
**Beijing 100085 (CN)**
• **DA, Ren**
**Beijing 100085 (CN)**

(74) Representative: **Cabinet Nony**
**11 rue Saint-Georges**
**75009 Paris (FR)**

(54) **TERMINAL POSITIONING METHOD, TERMINAL, BASE STATION, AND LMF**

(57) The present disclosure provides a method for positioning a terminal, a terminal, a base station and an LMF and relates to the technical field of wireless communications. The terminal performs ATA and/or AFA according to notification signaling transmitted by a network-side device, wherein the notification signaling includes indication information for indicating the terminal to perform the ATA and/or AFA; and transmits time information of the ATA and/or AFA performed by the terminal, wherein the time information of the ATA and/or AFA is used to determine a position of the terminal. By adopting the above method, the LMF may determine the position of the terminal according to each positioning measurement obtained within a time range between two adjacent ATA and/or AFA performed by the terminal, so the accuracy of positioning the terminal is improved.

```
                                                           ┌─ S1201
┌──────────────────────────────────────────────────────┐
│  perfoming ATA and/or AFA according to the notification │
│  signaling tranmistted by the netwrok-side device      │
└──────────────────────────────────────────────────────┘
                          │
                          ▼
                                                           ┌─ S1202
┌──────────────────────────────────────────────────────┐
│  transmitting time information of the ATA and/or AFA   │
│  performed by a terminal                               │
└──────────────────────────────────────────────────────┘
```

**FIG. 12**

**Description**

**CROSS-REFERENCE TO RELATED APPLICATIONS**

The present disclosure claims priority to Chinese Patent Application No. 202210459542.X, filed to the China Patent Office on April 27, 2022 and entitled "METHOD FOR POSITIONING TERMINAL, TERMINAL, BASE STATION AND LMF", the entire content of which is incorporated herein by reference.

**TECHNICAL FIELD**

The present disclosure relates to the technical field of wireless communications, in particular to a method for positioning a terminal, a terminal, a base station and an LMF.

**BACKGROUND**

At present, in a 5G positioning system, a crystal oscillator adopted by a 5G base station and a terminal has a frequency deviation, so the terminal will perform autonomous time adjustment (ATA) and autonomous frequency adjustment (AFA) operations by default. In a 5G sidelink (SL) positioning system, Vehicle to Everything-UE (V2X-UE) may adjust receiving timing and transmitting timing based on a received synchronization signal/PBCH block (SSB), or when a scene within coverage is switched to a scene beyond coverage, the V2X-UE may also perform ATA and/or AFA by default.

In downlink-time difference of arrival (DL-TDOA), uplink-time difference of arrival (UL-TDOA) or multiple cell-round trip time (Multi-RTT) positioning methods, the ATA and AFA operations by the terminal will affect accuracy of positioning the terminal.

**SUMMARY**

Embodiments of the present disclosure provide a method for positioning a terminal, a terminal, a base station and an LMF, which may cause a location management function (LMF) to perform joint processing on a positioning measurement based on time information of ATA and/or AFA, thereby improving accuracy of positioning the terminal.

In a first aspect, the embodiments of the present disclosure provides a method for positioning a terminal, applied to a terminal and comprising:

performing ATA and/or AFA according to notification signaling transmitted by a network-side device; wherein the notification signaling includes indication information for indicating the terminal to perform the ATA and/or AFA; and

transmitting time information of the ATA and/or AFA performed by the terminal; wherein the time information of the ATA and/or AFA is used to determine a position of the terminal.

According to the method for positioning the terminal provided by the embodiments of the present disclosure, the terminal performs the ATA and/or AFA according to the notification signaling transmitted by the network-side device and transmits the time information of performing the ATA and/or AFA to the LMF, and by the above method, the LMF may determine the position of the terminal according to each positioning measurement obtained within a time range between two adjacent ATA and/or AFA performed by the terminal, thereby improving the accuracy of positioning the terminal.

In some embodiments, before performing the ATA and/or AFA according to the notification signaling transmitted by the network-side device, the method further comprises:

transmitting a report to the network-side device that the terminal supports performing the ATA and/or AFA within a valid adjustment window (VAW), and receiving the notification signaling transmitted by the network-side device; or

transmitting a report to the network-side device that the terminal supports performing the ATA and/or AFA according to a predefined rule, and receiving the notification signaling transmitted by the network-side device.

In some embodiments, the indication information included in the notification signaling includes a VAW configuration parameter; and performing the ATA and/or AFA according to the notification signaling transmitted by the network-side device comprises:

based on that the time range of a VAW indicated by the VAW configuration parameter does not coincide with a signal processing time range, performing the ATA and/or AFA within a time range of the VAW; wherein the signal processing time range refers to a time range of processing a positioning reference signal.

In some embodiments, the indication information included in the notification signaling further includes a priority type parameter; the priority type parameter is used to indicate a priority relationship between the VAW and the positioning reference signal; and performing the ATA and/or AFA according to the notification signaling transmitted by the network-side device further comprises:

based on that the time range of the VAW indicated by the VAW configuration parameter coincides partially or completely with the signal processing time range, performing the ATA and/or AFA within the time range of VAW according to the priority relationship between the VAW and the positioning reference signal.

In some embodiments, performing the ATA and/or AFA within the time range of VAW according to the priority relationship between the VAW and the positioning reference signal comprises:

based on that a priority of the VAW is higher than a priority of the positioning reference signal, performing the ATA and/or AFA at a first moment, wherein the first moment is any moment within the time range of VAW; and

based on that the priority of the VAW is lower than the priority of the positioning reference signal, performing the ATA and/or AFA at any moment within the time range of VAW except a second moment, wherein the second moment is a moment of processing the positioning reference signal by the terminal.

In some embodiments, the indication information included in the notification signaling includes the predefined rule; the predefined rule indicates that the terminal does not to perform the ATA and/or AFA within a signal processing time range and performs the ATA and/or AFA after the positioning reference signal is processed; wherein the signal processing time range refers to a time range of processing the positioning reference signal.

In some embodiments, the positioning reference signal is a downlink positioning reference signal (DL PRS), and the signal processing time range is a time range of a measurement gap (MG) or a downlink positioning reference signal processing window (PRS processing window (PPW)) determined according to a resource configuration parameter of the DL PRS transmitted by an LMF; processing the positioning reference signal refers to receiving the DL PRS transmitted by a base station and performing a measurement; or

the positioning reference signal is an uplink sounding reference signal for positioning (UL SRS-Pos), the signal processing time range is determined according to a resource configuration parameter of the UL SRS-Pos transmitted by the base station; processing the positioning reference signal refers to transmitting the UL SRS-Pos to the base station; or

the positioning reference signal is a sidelink positioning reference signal (SL PRS), the terminal is a receiving terminal, and the signal processing time range is determined according to a time range of an MG or a PPW indicated in a resource configuration parameter of the SL PRS transmitted by the LMF; processing the positioning reference signal refers to receiving the SL PRS transmitted by a transmitting terminal and performing a measurement; or

the positioning reference signal is the SL PRS, the terminal is the transmitting terminal, and the signal processing time range is determined according to a resource configuration parameter of the SL PRS transmitted by the base station; and processing the positioning reference signal refers to transmitting the SL PRS to a receiving terminal.

In some embodiments, the notification signaling is LTE positioning protocol (LPP) signaling transmitted by the LMF; or

the notification signaling is radio resource control (RRC) signaling, media access control-control element (MAC CE) signaling or downlink control information (DCI) signaling transmitted by the base station.

In a second aspect, the embodiments of the present disclosure provides a method for positioning a terminal, applied to a base station and comprising:

receiving a terminal capability report transmitted by a first terminal; wherein the terminal capability report represents that the first terminal supports performing ATA and/or AFA within a valid adjustment window (VAW) or supports performing the ATA and/or AFA according to a predefined rule; and

transmitting notification signaling; wherein the notification signaling is used to indicate the first terminal to perform the ATA and/or AFA.

In some embodiments, the notification signaling includes a VAW configuration parameter and a priority type parameter; the priority type parameter is used to indicate a priority relationship between the VAW and a DL PRS; or

the notification signaling includes the predefined rule, the predefined rule indicates that the first terminal does not perform the ATA and/or AFA within a signal processing time range and performs the ATA and/or AFA after a positioning reference signal is processed; the positioning reference signal is a downlink positioning reference signal (DL PRS), an uplink sounding reference signal for positioning (UL SRS-Pos) or a sidelink positioning reference signal (SL PRS); and the signal processing time range refers to a time range of processing the positioning reference signal.

In some embodiments, the base station includes a serving base station and a neighbor base station.

In some embodiments, the notification signaling is radio resource control (RRC) signaling, media access control-control element (MAC CE) signaling or downlink control information (DCI) signaling.

In a third aspect, the embodiments of the present disclosure provides a method for positioning a terminal, applied to a location management function (LMF) and comprising:

receiving time information of ATA and/or AFA performed by the first terminal transmitted by the first terminal; and determining a position of the first terminal based on the time information of the ATA and/or AFA.

In some embodiments, determining the position of the first terminal based on the time information of the ATA and/or AFA comprises:

determining a time range between two adjacent ATA and/or AFA performed by the first terminal based on the time information of the ATA and/or AFA; and
determining the position of the first terminal according to various positioning measurements of the first terminal obtained within the time range; wherein the positioning measurements are obtained by measuring a positioning reference signal corresponding to the first terminal.

In some embodiments, before receiving the time information of the ATA and/or AFA performed by the first terminal transmitted by the first terminal, the method further comprises:

receiving a terminal capability report transmitted by the first terminal; wherein the terminal capability report represents that the first terminal supports performing the ATA and/or AFA within a valid adjustment window (VAW) or supports performing the ATA and/or AFA according to a predefined rule; and
transmitting notification signaling; wherein the notification signaling is used to indicate the first terminal to perform the ATA and/or AFA.

In some embodiments, the notification signaling is LPP signaling.
In some embodiments, the notification signaling includes a VAW configuration parameter and a priority type parameter; the priority type parameter is used to indicate a priority relationship between the VAW and a DL PRS; or
the notification signaling includes the predefined rule, the predefined rule indicates that the first terminal does not perform the ATA and/or AFA within a signal processing time range and performs the ATA and/or AFA after a positioning reference signal is processed; wherein the signal processing time range refers to a time range of processing the positioning reference signal.
In some embodiments, the positioning reference signal is a downlink positioning reference signal (DL PRS), the positioning measurements are a reference signal time difference (RSTD), a time difference between transmitting and receiving of the terminal, a downlink phase of arrival (which means that a phase of arrival (POA)), or a downlink phase difference of arrival (PDOA) transmitted by the first terminal; or

the positioning reference signal is an uplink sounding reference signal for positioning (UL SRS-Pos), and the positioning measurement is an uplink relative time of arrival (RTOA), a time difference between transmitting and receiving of a base station, an uplink POA, or an uplink PDOA transmitted by a base station; or
the positioning reference signal is a sidelink positioning reference signal (SL PRS), the first terminal is a receiving terminal, and the positioning measurement is a time difference of arrival (TDOA), a time difference between transmitting and receiving of the receiving terminal, an SL POA, or an SL PDOA transmitted by the first terminal; or
the positioning reference signal is the SL PRS, the first terminal is a transmitting terminal, and the positioning measurement is a time difference between transmitting and receiving of the first terminal.

In some embodiments, based on that the positioning reference signal is the DL PRS, the method further comprises:
receiving a positioning measurement and quality information of the positioning measurement obtained by measuring the DL PRS and transmitted by the first terminal.
In some embodiments, based on that the positioning reference signal is the SL PRS and the first terminal is the receiving terminal, the method further comprises:
receiving a positioning measurement and quality information of the positioning measurement obtained by measuring the SL PRS and transmitted by the first terminal.
In some embodiments, the quality information includes a signal-to-noise ratio (SNR), a signal-to-interference and noise ratio (SINR) or a variance of a measurement error.
In a fourth aspect, the embodiments of the present disclosure provides a terminal, comprising:

an adjusting unit, configured to perform ATA and/or AFA according to notification signaling transmitted by a network-side device; wherein the notification signaling includes indication information for indicating the terminal to perform the ATA and/or AFA; and

a first transmitting unit, configured to transmit time information of the ATA and/or AFA performed by the terminal; wherein the time information of the ATA and/or AFA is used to determine a position of the terminal.

In a fifth aspect, the embodiments of the present disclosure provides a base station, comprising:

a first receiving unit, configured to receive a terminal capability report transmitted by a first terminal; wherein the terminal capability report represents that the first terminal supports performing ATA and/or AFA within a valid adjustment window (VAW) or supports performing the ATA and/or AFA according to a predefined rule; and

a second transmitting unit, configured to transmit notification signaling; wherein the notification signaling is used to indicate the first terminal to perform the ATA and/or AFA.

In a sixth aspect, the embodiments of the present disclosure provides a location management function (LMF), comprising:

a second receiving unit, configured to receive time information of ATA and/or AFA performed by the first terminal transmitted by the first terminal; and

a determining unit, configured to determine a position of the first terminal based on the time information of the ATA and/or AFA.

In a seventh aspect, the embodiments of the present disclosure provides a terminal, comprising: a memory, a transceiver and a processor;

the memory is configured to store computer instructions;

the transceiver is configured to transceive data under control of the processor; and

the processor is configured to read a computer program in the memory and perform the following steps:

performing ATA and/or AFA according to notification signaling transmitted by a network-side device; wherein the notification signaling includes indication information for indicating the terminal to perform the ATA and/or AFA; and

controlling the transceiver to transmit time information of the ATA and/or AFA performed by the terminal; wherein the time information of the ATA and/or AFA is used to determine a position of the terminal.

In some embodiments, the transceiver may further be configured to:

transmit a report that the terminal supports performing the ATA and/or AFA within a valid adjustment window (VAW) to the network-side device, and receive the notification signaling transmitted by the network-side device; or

transmit a report to the network-side device that the terminal supports performing the ATA and/or AFA according to a predefined rule, and receive the notification signaling transmitted by the network-side device.

In some embodiments, the indication information included in the notification signaling includes a VAW configuration parameter; and the processor is configured to:

based on that the time range of a VAW indicated by the VAW configuration parameter does not coincide with a signal processing time range, perform the ATA and/or AFA within a time range of the VAW; wherein the signal processing time range refers to a time range of processing a positioning reference signal.

In some embodiments, the indication information included in the notification signaling further includes a priority type parameter; the priority type parameter is used to indicate a priority relationship between the VAW and the positioning reference signal; and the processor may further be configured to:

perform the ATA and/or AFA within the time range of VAW according to the priority relationship between the VAW and the positioning reference signal based on that the time range of the VAW indicated by the VAW configuration parameter coincides partially or completely with the signal processing time range.

In some embodiments, the processor is configured to:

perform the ATA and/or AFA at a first moment based on that a priority of the VAW is higher than a priority of the positioning reference signal, wherein the first moment is any moment within the time range of VAW, and a positioning reference signal of the first moment is discarded; and

perform the ATA and/or AFA at any moment within the time range of VAW except a second moment based on that the priority of the VAW is lower than the priority of the positioning reference signal, wherein the second moment is a moment of processing the positioning reference signal by the terminal.

In some embodiments, the indication information included in the notification signaling includes the predefined rule; the predefined rule indicates that the terminal does not perform the ATA and/or AFA within a signal processing time range and performs the ATA and/or AFA after the positioning reference signal is processed; wherein the signal processing time range refers to a time range of processing the positioning reference signal.

In some embodiments, the positioning reference signal is a downlink positioning reference signal (DL PRS), and the signal processing time range is a time range of a measurement gap (MG) or a downlink positioning reference signal processing window (PPW) determined according to a resource configuration parameter of the DL PRS transmitted by an LMF; processing the positioning reference signal refers to receiving the DL PRS transmitted by a base station and performing a measurement; or

the positioning reference signal is an uplink sounding reference signal for positioning (UL SRS-Pos), and the signal processing time range is determined according to a resource configuration parameter of the UL SRS-Pos transmitted by the base station; processing the positioning reference signal refers to transmitting the UL SRS-Pos to the base station; or

the positioning reference signal is a sidelink positioning reference signal (SL PRS), the terminal is a receiving terminal, the signal processing time range is determined according to a time range of an MG or a PPW indicated in a resource configuration parameter of the SL PRS transmitted by the LMF; processing the positioning reference signal refers to receiving the SL PRS transmitted by a transmitting terminal and performing a measurement; or

the positioning reference signal is the SL PRS, the terminal is the transmitting terminal, and the signal processing time range is determined according to a resource configuration parameter of the SL PRS transmitted by the base station; and processing the positioning reference signal refers to transmitting the SL PRS to the receiving terminal.

In some embodiments, the notification signaling is long-term-evolution positioning protocol (LPP) signaling transmitted by an LMF; or

the notification signaling is radio resource control (RRC) signaling, media access control-control element (MAC CE) signaling or downlink control information (DCI) signaling transmitted by a base station.

In an eighth aspect, the embodiments of the present disclosure provides a base station, comprising: a memory, a transceiver and a processor;

the memory is configured to store computer instructions;

the transceiver is configured to receive a terminal capability report transmitted by a first terminal under control of the processor; wherein the terminal capability report represents that the first terminal supports performing ATA and/or AFA within a valid adjustment window (VAW) or supports performing the ATA and/or AFA according to a predefined rule; and

transmit notification signaling; wherein the notification signaling is used to indicate the first terminal to perform the ATA and/or AFA.

In some embodiments, the notification signaling includes a VAW configuration parameter and a priority type parameter; the priority type parameter is used to indicate a priority relationship between the VAW and a DL PRS; or

the notification signaling includes the predefined rule, the predefined rule indicates that the first terminal does not perform the ATA and/or AFA within a signal processing time range and performs the ATA and/or AFA after a positioning reference signal is processed; the positioning reference signal is a downlink positioning reference signal (DL PRS), an uplink sounding reference signal for positioning (UL SRS-Pos) or a sidelink positioning reference signal (SL PRS); and the signal processing time range refers to a time range of processing the positioning reference signal.

In some embodiments, the base station includes a serving base station and a neighbor base station.

In some embodiments, the notification signaling is radio resource control (RRC) signaling, media access control-control element (MAC CE) signaling or downlink control information (DCI) signaling.

In a ninth aspect, the embodiments of the present disclosure provides a location management function (LMF), comprising: a memory, a transceiver and a processor;

the memory is configured to store computer instructions;

the transceiver is configured to transceive data under control of the processor; and

the processor is configured to read a computer program in the memory and perform:

controlling the transceiver to receive time information of ATA and/or AFA performed by the first terminal transmitted by the first terminal; and

determining a position of the first terminal based on the time information of the ATA and/or AFA.

In some embodiments, the processor is configured to:

determine a time range between two adjacent ATA and/or AFA performed by the first terminal based on the time information of the ATA and/or AFA; and

determine the position of the first terminal according to various positioning measurements of the first terminal obtained within the time range; wherein the positioning measurements are obtained by measuring a positioning reference signal corresponding to the first terminal.

In some embodiments, the transceiver may further be configured to:

receive a terminal capability report transmitted by the first terminal; wherein the terminal capability report represents that the first terminal supports performing the ATA and/or AFA within a valid adjustment window (VAW) or supports performing the ATA and/or AFA according to a predefined rule; and

transmit notification signaling; wherein the notification signaling is used to indicate the first terminal to perform the ATA and/or AFA.

In some embodiments, the notification signaling is long-term-evolution positioning protocol (LPP) signaling.

In some embodiments, the notification signaling includes a VAW configuration parameter and a priority type parameter; the priority type parameter is used to indicate a priority relationship between the VAW and a DL PRS; or the notification signaling includes the predefined rule, the predefined rule indicates that the first terminal does not perform the ATA and/or AFA within a signal processing time range and performs the ATA and/or AFA after a positioning reference signal is processed; wherein the signal processing time range refers to a time range of processing the positioning reference signal.

In some embodiments, the positioning reference signal is a downlink positioning reference signal (DL PRS), the positioning measurements are a reference signal time difference (RSTD), a time difference between transmitting and receiving of the terminal, a downlink phase of arrival (POA) value, or a downlink phase difference of arrival (PDOA) transmitted by the first terminal; or

the positioning reference signal is an uplink sounding reference signal for positioning (UL SRS-Pos), and the positioning measurement is an uplink relative time of arrival (RTOA), a time difference between transmitting and receiving of a base station, an uplink POA, or an uplink PDOA transmitted by a base station; or

the positioning reference signal is a sidelink positioning reference signal (SL PRS), the first terminal is a receiving terminal, and the positioning measurement is a time difference of arrival (TDOA), a time difference between transmitting and receiving of the receiving terminal, an SL POA, or an SL PDOA transmitted by the first terminal; or

the positioning reference signal is the SL PRS, the first terminal is a transmitting terminal, and the positioning measurement is a time difference between transmitting and receiving of the first terminal.

In some embodiments, based on that the positioning reference signal is the DL PRS, the transceiver is further configured to:

receive a positioning measurement and quality information of the positioning measurement obtained by measuring the DL PRS and transmitted by the first terminal.

In some embodiments, based on that the positioning reference signal is the SL PRS and the first terminal is the receiving terminal, the transceiver is further configured to:

receive a positioning measurement and quality information of the positioning measurement obtained by measuring the SL PRS and transmitted by the first terminal.

In some embodiments, the quality information includes a signal-to-noise ratio (SNR), a signal-to-interference and noise ratio (SINR) or a variance of a measurement error.

In a tenth aspect, the embodiments of the present disclosure provides a system for positioning a terminal, comprising a terminal, a base station and a location management function (LMF); and the terminal is any terminal in the seventh aspect, the base station is any base station in the eighth aspect, and the LMF is the LMF in the ninth aspect.

In an eleventh aspect, the embodiments of the present disclosure provides a computer-readable storage medium, storing computer instructions, wherein the computer instructions, when performed by a processor, implement any method in the first aspect, the second aspect or the third aspect.

Technical effects brought by any implementation in the second aspect to the eleventh aspect may refer to technical effects brought by the implementation in the first aspect, which are not described in detail here.

## BRIEF DESCRIPTION OF DRAWINGS

In order to more clearly describe technical solutions in embodiments of the present disclosure or in the related art, the accompanying drawings needed by the description in the embodiments or in the related art will be briefly introduced below. Apparently, the accompanying drawings in the following description are only some embodiments of the present disclosure. Those ordinarily skilled in the art may also obtain other accompanying drawings according to these accompanying drawings without making creative work.

FIG. 1 is a diagram of an application scene of a method for positioning a terminal suitable for the embodiments of the present disclosure.

FIG. 2 is a schematic flowchart of interaction of a downlink positioning method provided by the embodiments of the present disclosure.

FIG. 3 is a schematic diagram when a time range of the VAW does not coincide with a time range of an MG or a PPW provided by the embodiments of the present disclosure.

FIG. 4 is a schematic diagram when a time range of the VAW coincides partially with a time range of an MG or a PPW provided by the embodiments of the present disclosure.

FIG. 5 is a schematic diagram of a relationship between a terminal performing ATA and/or AFA and the terminal calculating a time difference between transmitting and receiving of the terminal in Multi-RTT positioning provided by the embodiments of the present disclosure.

FIG. 6 is a schematic flowchart of interaction of an uplink positioning method provided by the embodiments of the present disclosure.

FIG. 7 is a schematic diagram when a time range of the VAW does not coincide with a time range of transmitting, by a terminal, a UL SRS-Pos to a base station provided by the embodiments of the present disclosure.

FIG. 8 is a schematic flowchart of interaction of a sidelink positioning method provided by the embodiments of the present disclosure.

FIG. 9 is a schematic flowchart of interaction of another sidelink positioning method provided by the embodiments of the present disclosure.

FIG. 10 is another schematic diagram of a relationship between a terminal performing ATA and/or AFA and the terminal calculating a time difference between transmitting and receiving of the terminal in Multi-RTT positioning provided by the embodiments of the present disclosure.

FIG. 11 is a schematic diagram of performing, by a transmitting terminal and a receiving terminal, ATA and/or AFA provided by the embodiments of the present disclosure.

FIG. 12 is a schematic flowchart of a method for positioning a terminal provided by the embodiments of the present disclosure.

FIG. 13 is a schematic flowchart of a method for positioning a terminal provided by the embodiments of the present disclosure.

FIG. 14 is a schematic flowchart of a method for positioning a terminal provided by the embodiments of the present disclosure.

FIG. 15 is a structural block diagram of a terminal provided by the embodiments of the present disclosure.

FIG. 16 is a structural block diagram of a base station provided by the embodiments of the present disclosure.

FIG. 17 is a structural block diagram of an LMF provided by the embodiments of the present disclosure.

FIG. 18 is a schematic structural diagram of a terminal provided by the embodiments of the present disclosure.

FIG. 19 is a schematic structural diagram of a base station provided by the embodiments of the present disclosure.

FIG. 20 is a schematic structural diagram of an LMF provided by the embodiments of the present disclosure.

## DETAILED DESCRIPTION

Specific implementations of the present disclosure are described in detail below with reference to accompanying drawings. It is to be understood that specific implementations described here are merely for describing and explaining the present disclosure instead of limiting the present disclosure.

It is to be noted that "first" and "second" in the embodiments of the present disclosure are used to distinguish similar objects, but are not used to describe a specific sequence or sequential order. "And/or" in the embodiments of the present disclosure describes an association relationship between associated objects and represents that there may be three relationships, for example, A and/or B, which represents that merely A exists, both A and B exist, and merely B exists. A character "/" generally represents an "or" relationship between associated objects before and after the character.

A network architecture and a service scene described in the embodiments of the present disclosure are intended to describe the technical solutions of the embodiments of the present disclosure more clearly but do not constitute a limitation on the technical solutions provided by the embodiments of the present disclosure, and those ordinarily skilled in the art may know that with evolution of a network architecture and emergence of a new service scene, the technical solutions provided by the embodiments of the present disclosure are also applicable to similar technical problems.

At present, in a 5G positioning system, a crystal oscillator adopted by a 5G base station and a terminal has a frequency deviation, so the terminal will perform ATA and AFA operations by default. In a 5G sidelink (SL) positioning system, V2X-UE may adjust receiving timing and transmitting timing based on a received SSB, or when a scene within coverage is switched to a scene beyond coverage, the V2X-UE may also perform the ATA and/or AFA by default.

In a DL-TDOA, UL-TDOA or Multi-RTT positioning method, the ATA and AFA operations by the terminal will affect the accuracy of positioning the terminal.

Based on this, embodiments of the present disclosure provides a method for positioning a terminal, a terminal, a base station and an LMF. The method for positioning the terminal comprises: the terminal performs ATA and/or AFA according to notification signaling transmitted by a network-side device, wherein the notification signaling includes indication information for indicating the terminal to perform the ATA and/or AFA; and the terminal transmits time information of the ATA and/or AFA performed by the terminal to the LMF. The LMF may determine a position of the terminal according to each positioning measurement obtained within a time range between two adjacent ATA and/or AFA performed by the terminal through the above method, thereby improving the accuracy of positioning the terminal.

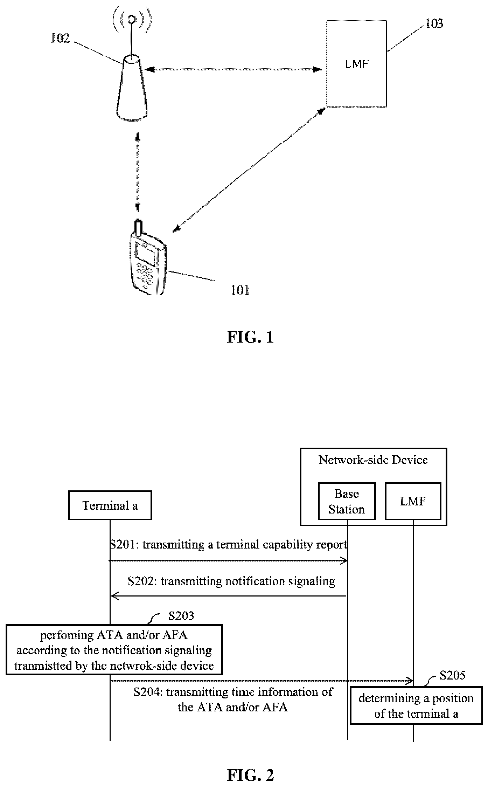

FIG. 1 is a schematic structural diagram of a system for positioning a terminal suitable for the embodiments of the present disclosure. The embodiments of the present disclosure is applied to the system for positioning the terminal. The system for positioning the terminal at least comprises a terminal 101, a base station 102 and an LMF 103. The base station 102 may be a serving base station for providing a service for the terminal 101, or may also be a neighbor base station with a distance away from the terminal 101 is less than a distance threshold, and the distance threshold may be 50 meters, or 100 meters, which is not limited by the present disclosure.

In an embodiment, the base station 102 or the LMF 103 may transmit notification signaling to the terminal 101, wherein the notification signaling includes indication information for indicating the terminal 101 to perform ATA and/or AFA; the terminal 101 may perform the ATA and/or AFA operations according to the notification signaling after receiving the notification signaling and transmit time information of performing the ATA and/or AFA to the LMF 103; and the LMF 103 may determine the position of the terminal according to each positioning measurement obtained within a time range between two adjacent ATA and/or AFA performed by the terminal 101.

The method for positioning the terminal provided by the present disclosure includes a downlink positioning method, an uplink positioning method and a sidelink positioning method, and different positioning methods will be respectively described in detail below through specific embodiments.

FIG. 2 shows a flowchart of interaction of a downlink positioning method provided by the embodiments of the present disclosure. The downlink positioning method is suitable for downlink positioning or Multi-RTT positioning. As shown in FIG. 2, the method is described by taking a network-side device and a terminal a as an example, and the terminal a represents any terminal. Specifically, the method comprises the following steps.

Step S201: the terminal a transmits a terminal capability report to the network-side device.

The network-side device may be a base station or an LMF, the base station may be a serving base station for providing a service for the terminal a, or a neighbor base station of the terminal a. The LMF may be an LMF connected with the terminal a or the base station.

The terminal capability report may be used to represent that the terminal a supportis performing ATA and/or AFA within a VAW; or the terminal capability report may also be used to represent that the terminal a supports performing the ATA and/or AFA according to a predefined rule.

Step S202: the network-side device transmits notification signaling to the terminal a.

In an embodiment, when the network-side device is the base station, the notification signaling may be RRC signaling, MAC CE signaling or DCI signaling transmitted by the base station; and when the network-side device is LMF, the notification signaling may be LPP signaling transmitted by the LMF.

The notification signaling includes indication information for indicating the terminal a to perform the ATA and/or AFA. The indication information may include a VAW configuration parameter and a priority type parameter, and the priority type parameter is used to indicate a priority relationship between the VAW and a DL PRS. The indication information may also include the predefined rule, and the predefined rule is used to indicate that the terminal a does not perform the ATA and/or AFA within a signal processing time range and performs the ATA and/or AFA after a positioning reference signal is processed. The signal processing time range refers to a time range of processing the positioning reference signal.

Step S203: the terminal a performs the ATA and/or AFA according to the notification signaling transmitted by the network-side device.

In an optional implementation, before the terminal a performs the ATA and/or AFA according to the notification signaling transmitted by the network-side device, the terminal a may also receive a resource configuration parameter of the DL PRS transmitted by the LMF and determine a time range of an MG or a PPW according to the resource configuration parameter of the DL PRS. The terminal a may receive the DL PRS transmitted by the base station within the time range and measure the DL PRS to obtain a downlink positioning measurement.

In an embodiment, it is assumed that the notification signaling includes the VAW configuration parameter and the priority type parameter for indicating the terminal a to perform the ATA and/or AFA, and after the terminal a receives the notification signaling, the terminal a may compare a time range of the VAW indicated by the VAW configuration parameter with the time range of the MG or the PPW determined according to the resource configuration parameter of the DL PRS and judge whether the time range of VAW coincides with the time range of the MG or the PPW.

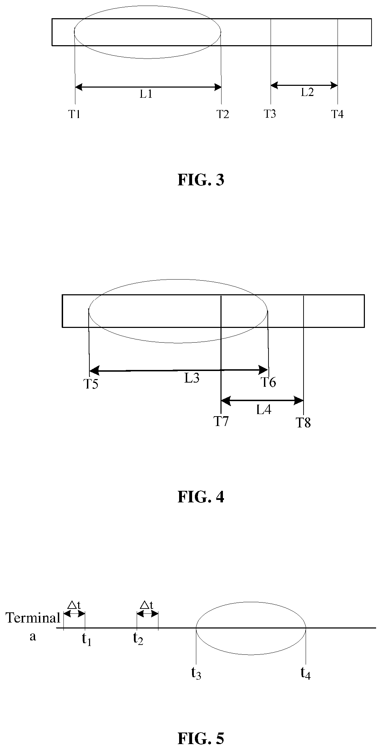

Exemplarily, in an embodiment, based on that the time range of VAW does not coincide with the time range of the MG or the PPW, as shown in FIG. 3, L1 is the time range of VAW, T1 is a start moment of the VAW, T2 is an end moment of the VAW, L2 is the time range of the MG or the PPW, T3 is a start moment of the MG or the PPW, T4 is an end moment of the MG or the PPW, the terminal a may perform the ATA and/or AFA within the time range of VAW, which means that the terminal a perform the ATA and/or AFA from the moment T1 to the moment T2; and the terminal a may receive the DL PRS transmitted by the base station within the time range of the MG or the PPW, which means that the terminal a may receive the DL PRS transmitted by the station from the moment T3 to the moment T4, and then measure the DL PRS to obtain the downlink positioning measurement.

In the embodiments of the present disclosure, the downlink positioning measurement may include an RSTD, a time difference between transmitting and receiving of the terminal, a downlink POA or a downlink PDOA.

In another embodiment, based on that the time range of VAW coincides partially or completely with the time range of the MG or the PPW, as shown in FIG. 4, L3 is the time range of VAW, T5 is a start moment of the VAW, T6 is an end moment of the VAW, L4 is the time range of the MG or the PPW, T7 is a start moment of the MG or the PPW, T8 is an end moment of the MG or the PPW, T5<T7<T6<T8, which means that the time range of VAW coincides partially with the time range of the MG or the PPW, the terminal a may determine the priority relationship between the VAW and the DL PRS according to the priority type parameter and perform the ATA and/or AFA within the time range of VAW according to the priority relationship between the VAW and the DL PRS.

Exemplarily, in an embodiment, based on that a priority of the VAW is higher than a priority of the DL PRS, the terminal a may select any moment within the time range of VAW as a first moment and perform the ATA and/or AFA at the first moment; and if the terminal a receives the DL PRS transmitted by the base station at the first moment, which means that the ATA and/or AFA performed by the terminal collides with the moment of processing the DL PRS and/or orthogonal frequency division multiplexing (OFDM) symbols, the terminal a may discard the DL PRS received at the first moment, which mean that the terminal a may use the DL PRS as an invalid signal. If the ATA and/or AFA performed by the terminal a does not collides with the moment of processing the DL PRS and/or the OFDM symbols, the DL PRS is a valid signal, which means that the terminal a may measure the received DL PRS to obtain the downlink positioning measurement.

In another embodiment, based on that the priority of the VAW is lower than the priority of the DL PRS, it is assumed that the terminal a receives the DL PRS transmitted by the base station at the second moment within the time range of the MG or the PPW, and may measure the DL PRS to obtain the downlink positioning measurement, and the second moment is any moment within the time range of the MG or the PPW. The terminal a may perform the ATA and/or AFA at any moment within the time range of VAW except the second moment. In the embodiments of the present disclosure, when there is no moment for performing the ATA and/or AFA within one DL PRS cycle, the cycle is an invalid cycle.

In another embodiment, it is assumed that the notification signaling includes the predefined rule for indicating the terminal a to perform the ATA and/or AFA, the terminal a may measure the received DL PRS transmitted by the base station according to the predefined rule to obtain the downlink positioning measurement after receiving the notification signaling, and then perform the ATA and/or AFA, which means that the terminal a does not perform the ATA and/or AFA within a time range of receiving and measuring the DL PRS transmitted by the base station.

Exemplarily, when the positioning method is Multi-RTT positioning, the terminal a cannot perform the ATA and/or AFA within a time range of the time difference between transmitting and receiving of the terminal computed by the terminal a, which means that the terminal a does not perform the ATA and/or the AFA within a time range of measuring the DL PRS and obtaining the downlink positioning measurement by the terminal a. Exemplarily, as shown in FIG. 5, the terminal a calculates the time range of time difference between receiving and transmitting of the terminal as $[t_1 - \Delta t, t_2 + \Delta t]$, wherein $\Delta t$ represents a margin, $t_3$ represents the start moment of the time range of the ATA and/or ATA performed by the terminal a, and $t_3$ represents the end moment of the time range of the ATA and/or ATA performed by the terminal a.

Step S204: the terminal a transmits time information of the ATA and/or AFA to the LMF.

Through the step S203, after the terminal a performs the ATA and/or AFA according to the notification signaling, the terminal a may transmit the indication information and the time information of the ATA and/or ATA performed by the terminal a to the LMF, wherein the indication information is used to indicate that the terminal a has performed the ATA and/or AFA.

Step S205: the LMF determines a position of the terminal a.

In an embodiment, before the LMF determines the position of the terminal a, the LMF may also receive the downlink positioning measurement transmitted by the terminal a, and the downlink positioning measurements are transmitted to the LMF after the terminal a measures the DL PRS transmitted by the base station. The LMF may receive a plurality of downlink positioning measurements within a time range between two adjacent ATA and/or AFA performed by the terminal a.

In an embodiment, before the LMF determines the position of the terminal a, the LMF may also receive quality information of the downlink positioning measurement transmitted by the terminal a and base station position information transmitted by the base station. The quality information of the downlink positioning measurement may be one or more of an SNR, an SINR or a variance of a measurement error.

Through the above method, the LMF may receive transmitted time information of the ATA and/or AFA sent by the terminal a after each ATA and/or AFA performed by the terminal a and then determine time of two adjacent ATA and/or AFA performed by the terminal. The LMF may determine the position of the terminal a according to the downlink positioning measurement transmitted by the terminal a, the quality information of the downlink positioning measurement transmitted by the terminal a, and position information of each base station associated with the terminal a received within the time range between two adjacent ATA and/or AFA performed by the terminal a.

Specifically, in an embodiment, the LMF may determine a weighted downlink positioning measurement corresponding to a moment $t_k$ according to the downlink positioning measurement and the quality information of the downlink positioning measurement by using a formula 1 and a formula 2. The moment $t_k$ may be any moment within the time range between two adjacent ATA and/or AFA performed by the terminal a.

$$x(k) = f\big(x_m(k), x_m(k-1), x_m(k-2), \dots x_m(k-M)\big) \text{ (Formula 1)}$$

$$f(n) = a_0 f_m(n) + a_1 f_m(n-1) + a_2 f_m(n-2) + \cdots + a_{M-1} f_m(n-M+1) \text{ (Formula}$$
$$2),$$

wherein represents the weighted downlink positioning measurement at the moment $t_k$, for example: an RSTD and the time difference between transmitting and receiving of the terminal; represents a downlink positioning measurement which is reported at a moment and not weighted, a value of i may be k, k-1, ..., k-M; is a weighting function which depends on a weighting algorithm; M represents the number of downlink positioning measurements reported within the time range between two adjacent ATA and/or AFA performed by the terminal; and is a weighted parameter, and $\sum_{i=0}^{M-1} a_i = 1$.

A weighted parameter may be determined according to different weighted algorithms and/or the quality information of the positioning measurement. For example, when the weighted algorithm is an average value weighting algorithm, the weighted parameter may be $a_0 = a_1 = \cdots = a_{M-1} = 1/M$; or the weighted parameter may be $a_0 = 1, a_1 = \cdots = a_{M-1} = 0$; or the weighted parameter may be $a_{M-1} = 1, a_0 = \cdots = a_{M-2} = 0$; or the weighted parameter may be $a_n = 1, a_0 = \cdots = a_{M-1} = 0$, wherein measurement quality of the downlink positioning measurement corresponding to is the highest.

After the weighted downlink positioning measurement corresponding to each moment within the time range between two adjacent ATA and/or AFA performed by the terminal a is determined, the LMF may determine the position of the terminal a according to the weighted downlink positioning measurement corresponding to each moment and the position information of each base station.

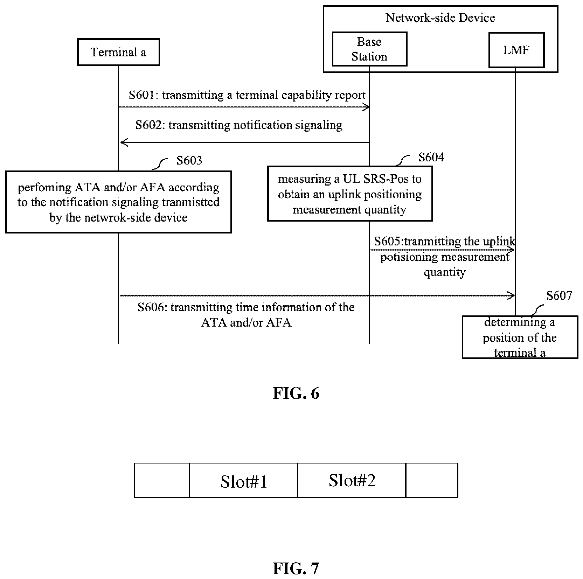

FIG. 6 shows a flowchart of interaction of an uplink positioning method provided by the embodiments of the present disclosure. The uplink positioning method is suitable for uplink positioning or Multi-RTT positioning. As shown in FIG. 6, the method is described by taking the network-side device and the terminal a as an example and the terminal a represents any terminal. Specifically, the method comprises the following steps.

Step S601: the terminal a transmits the terminal capability report to the network-side device.

Step S602: the network-side device transmits notification signaling to the terminal a.

Step S603: the terminal a performs the ATA and/or AFA according to the notification signaling transmitted by the network-side device.

In an optional implementation, before the terminal a performs the ATA and/or AFA according to the notification signaling transmitted by the network-side device, the terminal a may also receive a resource configuration parameter of a UL SRS-Pos transmitted by the base station, and determine a time range of transmitting the UL SRS-Pos to the base station by the terminal a according to the resource configuration parameter of the UL SRS-Pos.

In an embodiment, it is assumed that the notification signaling includes the VAW configuration parameter and the priority type parameter for indicating the terminal a to perform the ATA and/or AFA, and after the terminal a receives the notification signaling, the terminal a may compare a time range of the VAW indicated by the VAW configuration parameter with the time range of transmitting the UL SRS-Pos to the base station by the terminal a determined according to the resource configuration parameter of the UL SRS-Pos and judge whether the time range of VAW coincides with the time range of transmitting the UL SRS-Pos to the base station by the terminal a.

In an embodiment, based on that the time range of VAW does not coincide with the time range of transmitting the UL SRS-Pos to the base station by the terminal a, as shown in FIG. 7, a slot #1 (slot#1) is the time range of VAW, and a slot #2 (slot#2) is the time range of transmitting the UL SRS-Pos to the base station by the terminal a; the terminal a may perform the ATA and/or AFA within the time range of VAW, which means that perform the ATA and/or AFA within the slot#1; and the UL SRS-Pos may be transmitted to the base station within the time range of transmitting the UL SRS-Pos to the base station by the terminal a, which mean that the UL SRS-Pos may be transmitted to the base station within the slot#2.

In another embodiment, based on that the time range of VAW coincides partially or completely with the time range of transmitting the UL SRS-Pos to the base station by the terminal a, the terminal a may determine a priority relationship between the VAW and the UL SRS-Pos according to the priority type parameter and perform the ATA and/or AFA within the time range of VAW according to the priority relationship between the VAW and the UL SRS-Pos.

Exemplarily, in an embodiment, based on that a priority of the VAW is higher than a priority of the UL SRS-Pos, the terminal a may select any moment within the time range of VAW as a first moment and perform the ATA and/or AFA at the first moment; if the terminal a needs to transmit the UL SRS-Pos to the base station at the first moment, which means that the ATA and/or AFA performed by the terminal a collides with the moment of processing the UL SRS-Pos and/or orthogonal frequency division multiplexing (OFDM) symbols, the terminal a considers the UL SRS-Pos as an invalid signal, which means that the UL SRS-Pos is not transmitted to the base station; and if the ATA and/or AFA performed by the terminal a does not collide with the moment of processing the UL SRS-Pos and/or orthogonal frequency division multiplexing (OFDM) symbols, the UL SRS-Pos is a valid signal, and the terminal a may transmit the UL SRS-Pos to the base station.

In another embodiment, based on that the priority of the VAW is lower than the priority of the UL SRS-Pos, it is assumed that the terminal a transmits the UL SRS-Pos to the base station at a second moment within the time range of transmitting the UL SRS-Pos to the base station by the terminal a, and the second moment is any moment within the time range of transmitting the UL SRS-Pos to the base station by the terminal a. The terminal a may perform the ATA and/or AFA at any moment within the time range of VAW except the second moment. In the embodiments of the present disclosure, when there is no moment for performing the ATA and/or AFA in one UL SRS-Pos cycle, the cycle is an invalid cycle.

In another embodiment, it is assumed that the notification signaling includes the predefined rule for indicating the terminal a to perform the ATA and/or AFA, the terminal a may transmit the UL SRS-Pos to the base station according to the predefined rule after receiving the notification signaling and then perform the ATA and/or AFA, which means that the terminal a does not perform the ATA and/or AFA at a moment of transmitting the UL SRS-Pos to the base station by the terminal a.

Step S604: the base station measures the UL SRS-Pos to obtain an uplink positioning measurement.

The base station may measure the UL SRS-Pos to obtain the uplink positioning measurement after receiving the UL SRS-Pos transmitted by the terminal a in the step S603. The uplink positioning measurement may include an RTOA, a time difference between transmitting and receiving of a base station, an uplink POA or an uplink PDOA.

Step S605: the base station transmits the uplink positioning measurement to the LMF.

Step S606: the terminal a transmits the time information of the ATA and/or AFA to the LMF.

After the terminal a performs the ATA and/or AFA according to the notification signaling in the step S603, the terminal a may transmit the indication information and the time information of the ATA and/or AFA performed by the terminal a to the LMF.

Step S607: the LMF determines the position of the terminal a.

In an embodiment, before the LMF determines the position of the terminal a, the LMF may also receive base station position information transmitted by the base station.

Through the above method, the LMF may receive time information of the ATA and/or AFA after each ATA and/or AFA performed by the terminal a and then determine times of two adjacent ATA and/or AFA performed by the terminal. The LMF may determine the position of the terminal a according to the uplink positioning measurement transmitted by the base station and position information of each base station associated with the terminal a within the time range between two adjacent ATA and/or AFA performed by the terminal a.

Exemplarily, the LMF may determine the position of the terminal a according to Formula 1 and Formula 2, and a specific implementation is similar to steps of the above downlink positioning method, which is not described in detail here.

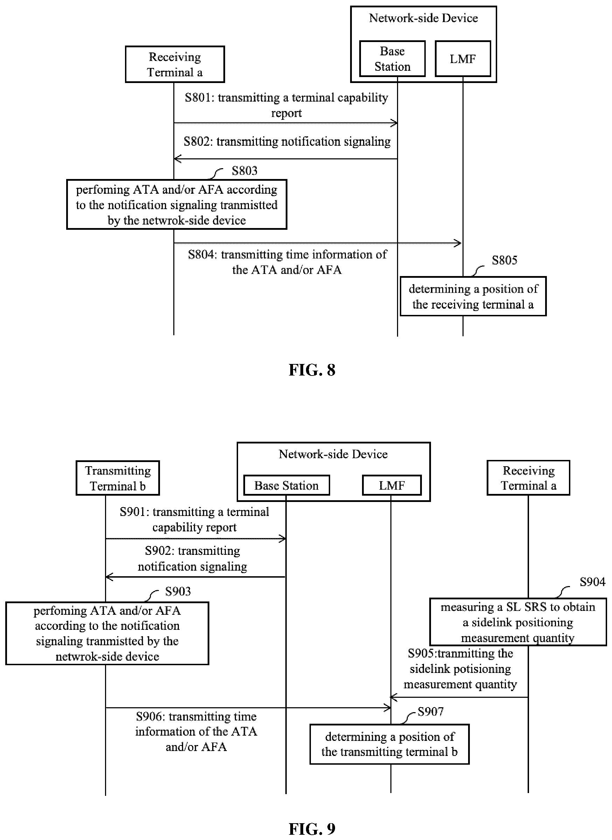

FIG. 8 shows a flowchart of interaction of a sidelink positioning method provided by the embodiments of the present disclosure. The method is described by taking the network-side device and a receiving terminal a as an example and the receiving terminal a represents any receiving terminal. As shown in FIG. 8, the method comprises the following steps.

Step S801: the receiving terminal a transmits the terminal capability report to the network-side device.

Step S802: the network-side device transmits notification signaling to the receiving terminal a.

Step S803: the receiving terminal a performs the ATA and/or AFA according to the notification signaling transmitted by the network-side device.

In an optional implementation, before the receiving terminal a performs the ATA and/or AFA according to the notification signaling transmitted by the network-side device, the receiving terminal a may also receive a resource configuration parameter of the SL PRS transmitted by the LMF, and determine a time range of an MG or a PPW according to the resource configuration parameter of the SL PRS. The receiving terminal a may receive the SL PRS transmitted by a transmitting terminal b within the time range, and measure the SL PRS to obtain a sidelink positioning measurement.

In an embodiment, it is assumed that the notification signaling includes the VAW configuration parameter and the priority type parameter for indicating the receiving terminal a to perform the ATA and/or AFA, and after the receiving terminal a receives the notification signaling, the receiving terminal a may compare a time range of the VAW indicated by the VAW configuration parameter with the time range of the MG or the PPW determined according to the resource configuration parameter of the SL PRS and judge whether the time range of VAW coincides with the time range of the MG or the PPW.

In an embodiment, based on that the time range of VAW does not coincide with the time range of the MG or the PPW, the receiving terminal a may perform the ATA and/or AFA within the time range of VAW; and receive the SL PRS transmitted by the transmitting terminal b within the time range of the MG or the PPW, and measure the SL PRS to obtain the sidelink positioning measurement.

In the embodiments of the present disclosure, the sidelink positioning measurement may include a TDOA, a time difference between transmitting and receiving of the terminal of the receiving terminal, an SL POA or an SL PDOA.

In another embodiment, based on that the time range of VAW coincides partially or completely with the time range of the MG or the PPW, the receiving terminal a may determine a priority relationship between the VAW and the SL PRS according to the priority type parameter and perform the ATA and/or AFA within the time range of VAW according to the priority relationship between the VAW and the SL PRS.

Exemplarily, in an embodiment, based on that the priority of the VAW is higher than a priority of the SL PRS, the receiving terminal a may select any moment within the time range of VAW as a first moment and perform the ATA and/or AFA at the first moment; and if the receiving terminal a receives the SL PRS transmitted by the transmitting terminal b at the first moment, which means that the ATA and/or AFA performed by the receiving terminal a collides with the moment of processing the SL PRS and/or the orthogonal frequency division multiplexing (OFDM) symbols, the receiving terminal a may discard the SL PRS corresponding to the first moment, which means that the receiving terminal a may consider the SL PRS as an invalid signal. If the ATA and/or AFA performed by the receiving terminal a does not collide with the moment of processing the SL PRS and/or the orthogonal frequency division multiplexing (OFDM) symbols, the SL PRS is a valid signal, which means that the receiving terminal a may measure the received SL PRS transmitted by the transmitting terminal b to obtain the sidelink positioning measurement.

In another embodiment, based on that the priority of the VAW is lower than the priority of the SL PRS, it is assumed that the receiving terminal a receives the SL PRS transmitted by the transmitting terminal b at the second moment within the time range of the MG or the PPW, the receiving terminal a may measure the SL PRS to obtain the sideline positioning measurement, wherein the second moment is any moment within the time range of the MG or the PPW. The receiving terminal a may perform the ATA and/or AFA at any moment within the time range of VAW except the second moment. In the embodiments of the present disclosure, when there is no moment for performing the ATA and/or AFA in one SL PRS cycle, the cycle is an invalid cycle.

In another embodiment, it is assumed that the notification signaling includes the predefined rule for indicating the receiving terminal a to perform the ATA and/or AFA, the receiving terminal a may measure the received SL PRS according to the predefined rule after receiving the notification signaling to obtain the sidelink positioning measurement, and then perform the ATA and/or AFA, which means that the receiving terminal a does not perform the ATA and/or AFA within a time range of receiving the SL PRS transmitted by the transmitting terminal b and measuring.

Step S804: the receiving terminal a transmits time information of the ATA and/or AFA to the LMF.

After the receiving terminal a performs the ATA and/or AFA according to the notification signaling in the step S803, the receiving terminal a may transmit the indication information and the time information of the ATA and/or AFA performed by the receiving terminal a to the LMF, wherein the indication information is used to indicate that the receiving terminal a has performed the ATA and/or AFA.

Step S805: the LMF determines a position of the receiving terminal a.

In an embodiment, before the LMF determines the position of the receiving terminal a, the LMF may also receive the sidelink positioning measurement transmitted by the receiving terminal a, and the sidelink positioning measurements are transmitted to the LMF after the receiving terminal a measures the SL PRS transmitted by the transmitting terminal b. The LMF may receive a plurality of sidelink ies within a time range between two adjacent ATA and/or AFA performed by the receiving terminal a.

In an embodiment, before the LMF determines the position of the receiving terminal a, the LMF may also receive quality information of the sidelink positioning measurement transmitted by the receiving terminal a and base station position information transmitted by the base station. The quality information of the sidelink positioning measurement may be one or more of an SNR, an SINR or a variance of a measurement error.

Through above method, the LMF may receive transmitted time information of the ATA and/or AFA after each ATA and/or AFA performed by the receiving terminal a and then determine time between two adjacent ATA and/or AFA performed by the receiving terminal a. The LMF may determine the position of the receiving terminal a according to the downlink positioning measurement transmitted by the receiving terminal a, the quality information of the downlink positioning measurement and position information of each base station associated with the receiving terminal a within the time range between two adjacent ATA and/or AFA performed by the receiving terminal a.

Exemplarily, the LMF may determine the position of the receiving terminal a according to Formula 1 and Formula 2, and a specific implementation is similar to steps of the above downlink positioning method, which is not described in detail here.

FIG. 9 shows a flowchart of interaction of another sidelink positioning method provided by the embodiments of the present disclosure. The method is described by taking the network-side device and the transmitting terminal b as an example, and the transmitting terminal b represents any one transmitting terminal. As shown in FIG. 9, the method comprises the following steps.

Step S901: the transmitting terminal b transmits the terminal capability report to the network-side device.

Step S902: the network-side device transmits notification signaling to the transmitting terminal b.

Step S903: the transmitting terminal b performs the ATA and/or AFA according to the notification signaling transmitted by the network-side device.

In an optional implementation, before the transmitting terminal b performs the ATA and/or AFA according to the notification signaling transmitted by the network-side device, the transmitting terminal b may also receive a resource configuration parameter of the SL PRS transmitted by the base station, and determine a time range of transmitting the SL PRS to the receiving terminal a by the transmitting terminal b according to the resource configuration parameter of the SL PRS.

In an embodiment, it is assumed that the notification signaling includes the VAW configuration parameter and the priority type parameter for indicating the transmitting terminal to perform the ATA and/or AFA, and after the transmitting terminal b receives the notification signaling, the transmitting terminal b may compare a time range of the VAW indicated by the VAW configuration parameter with the time range of transmitting the SL PRS to the receiving terminal a by the transmitting terminal b determined according to the resource configuration parameter of the SL PRS and judge whether the time range of VAW coincides with the time range of transmitting the SL PRS to the receiving terminal a by the transmitting terminal b.

In an embodiment, based on that the time range of VAW does not coincide with the time range of transmitting the SL PRS to the receiving terminal a by the transmitting terminal b, the transmitting terminal b may perform the ATA and/or AFA within the time range of VAW; and transmit the SL PRS to the receiving terminal a within the time range of transmitting the SL PRS to the receiving terminal a by the transmitting terminal b.

In another embodiment, based on that the time range of VAW coincides partially or completely with the time range of transmitting the SL PRS to the receiving terminal a by the transmitting terminal b, the transmitting terminal b may determine a priority relationship between the VAW and the SL PRS according to the priority type parameter and perform the ATA and/or AFA within the time range of VAW according to the priority relationship between the VAW and the SL PRS.

Exemplarily, in an embodiment, based on that the priority of the VAW is higher than the priority of the SL PRS, the transmitting terminal b may select any moment within the time range of VAW as a first moment and perform the ATA and/or AFA at the first moment; and if the transmitting terminal b needs to transmit the SL PRS to the receiving terminal a at the first moment, which means that the ATA and/or AFA performed by the transmitting terminal b collides with the moment of processing the SL PRS and/or the orthogonal frequency division multiplexing (OFDM) symbols, the transmitting terminal b may consider the SL PRS as the invalid signal, which mean that the tansmitting terminal does not transmit the SL PRS to the receiving terminal a; and if the ATA and/or AFA performed by the transmitting terminal b does not collide with the moment of processing the SL PRS and/or the orthogonal frequency division multiplexing (OFDM) symbols, the SL PRS is the valid signal, which means that the transmitting terminal b may transmit the SL PRS to the receiving terminal a.

In another embodiment, based on that the priority of the VAW is lower than the priority of the SL PRS, it is assumed that the transmitting terminal b transmits the SL PRS to the receiving terminal a at the second moment within the time range of transmitting the SL PRS to the receiving terminal a by the transmitting terminal b, and the second moment is any moment within the time range of transmitting the SL PRS to the receiving terminal a by the transmitting terminal b. The transmitting terminal b may perform the ATA and/or AFA at any moment within the time range of VAW except the second moment. In the embodiments of the present disclosure, when there is no moment for performing the ATA and/or AFA in one SL PRS cycle, the cycle is an invalid cycle.

In another embodiment, it is assumed that the notification signaling includes the predefined rule for indicating the transmitting terminal b to perform the ATA and/or AFA, the transmitting terminal b may transmit the SL PRS to the receiving terminal a according to the predefined rule after receiving the notification signaling and then perform the ATA and/or AFA, which means that the transmitting terminal b does not perform the ATA and/or AFA at a moment of transmitting the SL PRS to the receiving terminal a by the transmitting terminal b.

Step S904: the receiving terminal a measures the SL PRS to obtain the sidelink positioning measurement.

Through the step S904 the receiving terminal a may measure the SL PRS after receiving the SL PRS transmitted by the transmitting terminal b to obtain the sidelink positioning measurement.

Step S905: the receiving terminal a transmits the sidelink positioning measurement to the LMF.

Step S906: the transmitting terminal b transmits the time information of the ATA and/or AFA to the LMF.

The transmitting terminal b may transmit the indication information and the time information of the ATA and/or AFA performed by the transmitting terminal b to the LMF after the transmitting terminal b performs the ATA and/or AFA according to the notification signaling in the step S903.

Step S907: The LMF determines a position of the transmitting terminal b.

In an embodiment, before the LMF determines the position of the transmitting terminal b, the LMF may also receive base station position information transmitted by the base station.

Through above method, the LMF may receive transmitted time information of the ATA and/or AFA after each ATA and/or AFA performed by the transmitting terminal b and then determine time between two adjacent ATA and/or AFA performed by the transmitting terminal b. The LMF may determine the position of the transmitting terminal b according to the uplink positioning measurement transmitted by the receiving terminal a and position information of each base station associated with the transmitting terminal b within the time range between two adjacent ATA and/or AFA performed by the transmitting terminal b.

Exemplarily, the LMF may determine the position of the transmitting terminal b according to Formula 1 and Formula 2, and a specific implementation is similar to steps of the above downlink positioning method, which is not described in detail here.

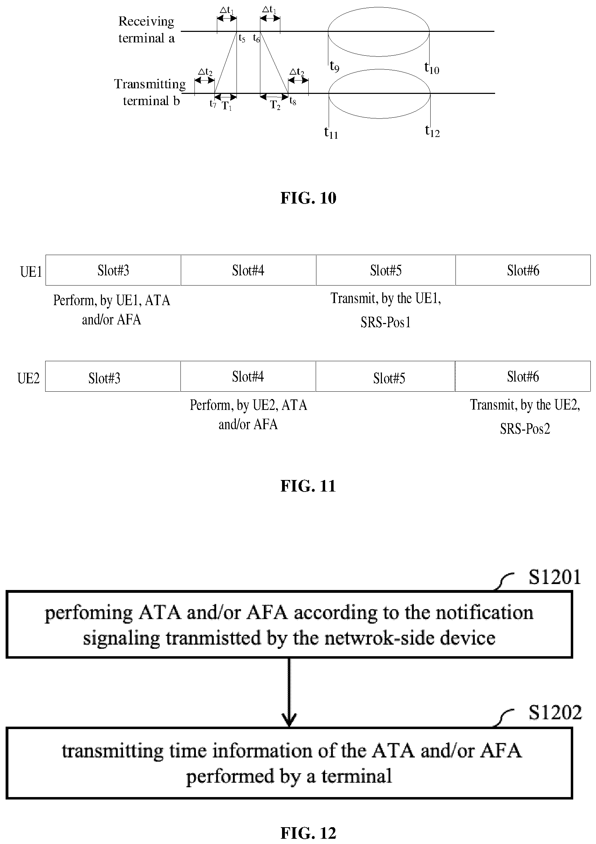

In the embodiments of the present disclosure, the sidelink positioning method shown in FIG. 8 and FIG. 9 is also suitable for Multi-RTT positioning. When the positioning method is Multi-RTT positioning, neither the receiving terminal a nor the transmitting terminal b can perform the ATA and/or AFA within the time range of calculating the time difference between transmitting and receiving of the terminal by the receiving terminal a and the transmitting terminal b, which means that within a time range of measuring the SL PRS by the receiving terminal a and obtaining the sidelink positioning measurement, as shown in FIG. 10, $[t_5 - \Delta t_1, t_6 + \Delta t_1]$ is the time range of calculating the time difference between transmitting and receiving of the terminal by the receiving terminal a, $t_9$ represents a start moment of the time range of the ATA and/or AFA performed by the receiving terminal a, $t_{10}$ represents an end moment of the time range of the ATA and/or AFA performed by the receiving terminal a, $\Delta t_1$ represent a margin, and $\Delta t_1 \geq 0$; $[t_7 - \Delta t_2, t_8 + \Delta t_2]$ is the calculating the time difference between transmitting and receiving of the terminal by the transmitting terminal b, $t_{11}$ represents a start moment of the time range of the ATA and/or AFA performed by the transmitting terminal b, $t_{12}$ represents an end moment of the time range of the ATA and/or AFA performed by the transmitting terminal b, $\Delta t_2$ represents a margin, and $\Delta t_2 \geq 0$; and RTT of the SL PRS between the receiving terminal a and the transmitting terminal b may be represented by Formula 3.

$$\text{RTT} = T_1 + T_2 = (t_5 - t_7) + (t_8 - t_6) = (t_5 - t_6) + (t_8 - t_7) \text{ (Formula 3)}$$

In an embodiment, in the sidelink positioning method shown in FIG. 8 and FIG. 9, the transmitting terminal b is relative to the receiving terminal a, exemplarily, UE1 may transmit the SL PRS to UE2 and may also receive the SL PRS transmitted by the UE2, so for the UE2, the UE1 may be the transmitting terminal or the receiving terminal.

In this embodiment, the transmitting terminal b may be regarded as a base station of the receiving terminal a. Exemplarily, as shown in FIG. 11, when the UE2 is the transmitting terminal and the UE1 is the receiving terminal, it is assumed that four successive SL slots are included in a 5ms SL PRS cycle, the UE2 may indicate the UE1 to perform the ATA and/or AFA operation at the first SL slot, which means that slot#3 (slot#3), the UE2 may perform the ATA and/or AFA operation at the second SL slot, which means that slot#4 (slot#4); the UE1 may transmit SRS-Pos1 to the UE2 in the third SL slot, which means that slot#5 (slot#5); and the UE2 may transmit SRS-Pos2 to the UE1 in the fourth SL slot, which means that slot#6 (slot#6). Thus, the terminal does not perform the ATA and/or AFA operation within the time range of processing the SL PRS by the terminal.

Based on the same inventive concept, an embodiment provided by the present disclosure provides a flowchart of a method for positioning a terminal. The method is performed by the terminal. As shown in FIG. 12, the method comprises the following steps.

Step S1201: performing ATA and/or AFA according to notification signaling transmitted by a network-side device.

The notification signaling includes indication information for indicating the terminal to perform the ATA and/or AFA.

Step S1202: transmitting time information of the ATA and/or AFA performed by the terminal.

The time information of the ATA and/or AFA is used to determine a position of the terminal.

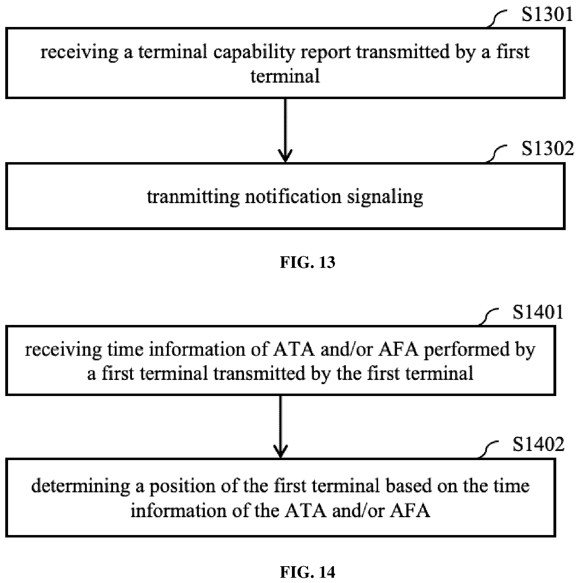

Based on the same inventive concept, an embodiment provided by the present disclosure provides a flowchart of a method for positioning a terminal. The method is performed by a base station. As shown in FIG. 13, the method comprises the following steps.

Step S1301: receiving a terminal capability report transmitted by a first terminal.

The terminal capability report represents that the first terminal supports performing the ATA and/or AFA within a valid adjustment window (VAW) or supports performing the ATA and/or AFA according to a predefined rule.

Step S1302: transmitting notification signaling.

The notification signaling is used to indicate the first terminal to perform the ATA and/or AFA.

Based on the same inventive concept, an embodiment provided by the present disclosure provides a flowchart of a method for positioning a terminal. The method is performed by an LMF. As shown in FIG. 14, the method comprises the following steps.

Step S1401: receiving time information of the ATA and/or AFA performed by the first terminal transmitted by the first terminal.

Step S1402: determining a position of the first terminal based on the time information of the ATA and/or AFA.

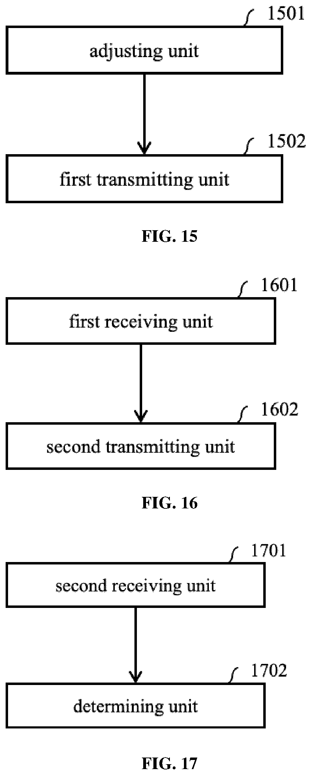

Based on the same inventive concept, an embodiment provided by the present disclosure provides a terminal, as shown in FIG. 15, comprising an adjusting unit 1501 and a first transmitting unit 1502.

The adjusting unit 1501 is configured to perform ATA and/or AFA according to notification signaling transmitted by a network-side device; wherein the notification signaling includes indication information for indicating the terminal to perform the ATA and/or AFA.

The first transmitting unit 1502 is configured to transmit time information of the ATA and/or AFA performed by the terminal to an LMF; wherein the time information of the ATA and/or AFA is used to determine a position of the terminal.

In some embodiments, before the adjusting unit 1501, the terminal may further comprise a processing unit, which may be specifically configured to:

transmit a report that the terminal supports performing the ATA and/or AFA within a valid adjustment window (VAW) to the network-side device, and receive the notification signaling transmitted by the network-side device; or
transmit a report to the network-side device that the terminal supports performing the ATA and/or AFA according to a predefined rule, and receive the notification signaling transmitted by the network-side device.

In some embodiments, the adjusting unit 1501 is specifically configured to:
perform the ATA and/or AFA within a time range of the VAW based on that a time range of the VAW indicated by a VAW configuration parameter does not coincide with a signal processing time range; wherein the signal processing time range refers to a time range of processing a positioning reference signal.

In some embodiments, the adjusting unit 1501 is specifically configured to:
perform the ATA and/or AFA within the time range of VAW according to a priority relationship between the VAW and the positioning reference signal based on that the time range of the VAW indicated by the VAW configuration parameter coincides partially or completely with the signal processing time range.

In some embodiments, the adjusting unit 1501 is specifically configured to:

perform the ATA and/or AFA at a first moment based on that a priority of the VAW is higher than a priority of the positioning reference signal, wherein the first moment is any moment within the time range of VAW, and a positioning reference signal of the first moment is discarded; and
perform the ATA and/or AFA at any moment within the time range of VAW except a second moment based on that the priority of the VAW is lower than the priority of the positioning reference signal, wherein the second moment is a moment of processing the positioning reference signal by the terminal.

In some embodiments, the indication information included in the notification signaling includes the predefined rule; the predefined rule indicates that the terminal does not perform the ATA and/or AFA within the signal processing time range and performs the ATA and/or AFA after the positioning reference signal is processed; wherein the signal processing time range refers to a time range of processing the positioning reference signal.

In some embodiments, the positioning reference signal is a downlink positioning reference signal (DL PRS), and the signal processing time range is a time range of a measurement gap (MG) or a downlink positioning reference signal processing window (PPW) determined according to a resource configuration parameter of the DL PRS transmitted by an LMF; processing the positioning reference signal refers to receiving the DL PRS transmitted by a base station and performing a measurement; or

the positioning reference signal is an uplink sounding reference signal for positioning (UL SRS-Pos), and the signal processing time range is determined according to a resource configuration parameter of the UL SRS-Pos transmitted by the base station; processing the positioning reference signal refers to transmitting the UL SRS-Pos to the base station; or
the positioning reference signal is a sidelink positioning reference signal (SL PRS), the terminal is a receiving terminal, and the signal processing time range is determined according to a time range of an MG or a PPW indicated in a resource configuration parameter of the SL PRS transmitted by the LMF; processing the positioning reference signal refers to receiving the SL PRS transmitted by a transmitting terminal and performing a measurement; or

the positioning reference signal is the SL PRS, the terminal is the transmitting terminal, and the signal processing time range is determined according to a resource configuration parameter of the SL PRS transmitted by the base station; and processing the positioning reference signal refers to transmitting the SL PRS to the receiving terminal.

In some embodiments, the notification signaling is long-term-evolution positioning protocol (LPP) signaling transmitted by the LMF; or

the notification signaling is radio resource control (RRC) signaling, media access control-control element (MAC CE) signaling or downlink control information (DCI) signaling transmitted by the base station.

Exemplarily, the network-side device may be but is not limited to the base station, the LMF and other entities or devices.

Based on the same inventive concept, an embodiment provided by the present disclosure provides a base station, as shown in FIG. 16, comprising a first receiving unit 1601 and a second transmitting unit 1602.

The first receiving unit 1601 is configured to receive a terminal capability report transmitted by a first terminal; wherein the terminal capability report represents that the first terminal supports performing ATA and/or AFA within a valid adjustment window (VAW) or supports performing the ATA and/or AFA according to a predefined rule.

The second transmitting unit 1602 is configured to transmit notification signaling to the first terminal; wherein the notification signaling is used to indicate the first terminal to perform the ATA and/or AFA.

In some embodiments, the notification signaling includes a VAW configuration parameter and a priority type parameter; the priority type parameter is used to indicate a priority relationship between the VAW and a DL PRS; or

the notification signaling includes the predefined rule, the predefined rule indicates that the first terminal does not perform the ATA and/or AFA within a signal processing time range and performs the ATA and/or AFA after a positioning reference signal is processed; the positioning reference signal is a downlink positioning reference signal (DL PRS), an uplink sounding reference signal for positioning (UL SRS-Pos) or a sidelink positioning reference signal (SL PRS); and the signal processing time range refers to a time range of processing the positioning reference signal.

In some embodiments, the base station includes a serving base station and a neighbor base station.

In some embodiments, the notification signaling is radio resource control (RRC) signaling, media access control-control element (MAC CE) signaling or downlink control information (DCI) signaling.

Based on the same inventive concept, an embodiment provided by the present disclosure provides an LMF, as shown in FIG. 17, comprising a second receiving unit 1701 and a determining unit 1702.

The second receiving unit 1701 is configured to receive time information of ATA and/or AFA performed by the first terminal transmitted by the first terminal.

The determining unit 1702 is configured to determine a position of the first terminal based on the time information of the ATA and/or AFA.

In some embodiments, the determining unit 1702 is specifically configured to:

determine a time range between two adjacent ATA and/or AFA performed by the first terminal based on the time information of the ATA and/or AFA; and

determine the position of the first terminal according to various positioning measurements of the first terminal obtained within the time range; wherein the positioning measurements are obtained by measuring a positioning reference signal corresponding to the first terminal.

In some embodiments, before the second receiving unit 1701, the LMF may also comprise a second processing unit and be specifically configured to:

receive a terminal capability report transmitted by the first terminal; wherein the terminal capability report represents that the first terminal supports performing the ATA and/or AFA within a valid adjustment window (VAW) or supports performing the ATA and/or AFA according to a predefined rule; and

transmit notification signaling to the first terminal; wherein the notification signaling is used to indicate the first terminal to perform the ATA and/or AFA.

In some embodiments, the notification signaling is long-term-evolution positioning protocol (LPP) signaling.

In some embodiments, the notification signaling includes a VAW configuration parameter and a priority type parameter; the priority type parameter is used to indicate a priority relationship between the VAW and a DL PRS; or

the notification signaling includes the predefined rule, the predefined rule indicates that the first terminal does not perform the ATA and/or AFA within a signal processing time range and performs the ATA and/or AFA after a positioning reference signal is processed; wherein the signal processing time range refers to a time range of processing the positioning reference signal.

In some embodiments, the positioning reference signal is a DL PRS, and a positioning measurement is an RSTD, a time difference between transmitting and receiving of the terminal, a downlink POA, or a downlink PDOA transmitted by the first terminal; or

the positioning reference signal is a UL SRS-Pos, and the positioning measurement is an uplink RTOA, a time difference between transmitting and receiving of a base station, an uplink POA, or an uplink PDOA transmitted by a base station; or

the positioning reference signal is an SL PRS, the first terminal is a receiving terminal, and the positioning measurement is a TDOA, a time difference between transmitting and receiving of the receiving terminal, an SL POA, or an SL PDOA transmitted by the first terminal; or

the positioning reference signal is the SL PRS, the first terminal is a transmitting terminal, and the positioning measurement is a time difference between transmitting and receiving of the first terminal.

In some embodiments, based on that the positioning reference signal is the DL PRS, the LMF further comprises a third receiving unit, and the third receiving unit is specifically configured to:
receive a positioning measurement and quality information of the positioning measurement obtained by measuring the DL PRS and transmitted by the first terminal.

In some embodiments, based on that the positioning reference signal is the SL PRS, the LMF further comprises a fourth receiving unit, and the fourth receiving unit is specifically configured to:
receive a positioning measurement and quality information of the positioning measurement obtained by measuring the SL PRS and transmitted by the first terminal.

In some embodiments, the quality information includes an SNR, an SINR or a variance of a measurement error.

Based on the same technical concept, the embodiments of the present disclosure further provides a terminal. The terminal can perform any method for positioning the terminal implemented in the above embodiments.

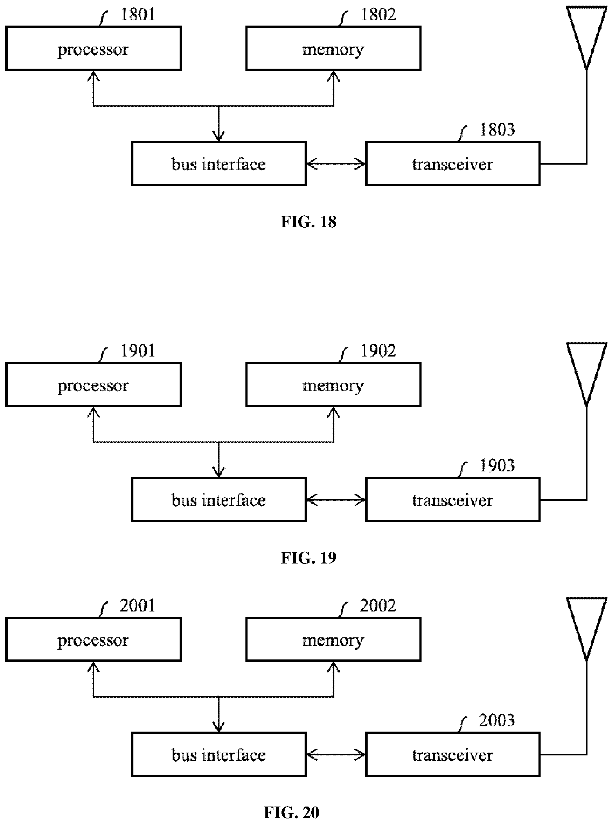

FIG. 18 shows a schematic structural diagram of the terminal provided by the embodiments of the present disclosure, which means that shows another schematic structural diagram of the terminal. As shown in FIG. 18, the terminal comprises a processor 1801, a memory 1802 and a transceiver 1803.

The processor 1801 is responsible for managing a bus architecture and general processing, and the memory 1802 may store data used by the processor 1801 when performing operations. The transceiver 1803 is configured to receive and transmit data under control of the processor 1801.

The bus architecture may comprise any quantity of interconnected buses and bridges, specifically, linking various circuits of one or more processors represented by the processor 1801 and a memory represented by the memory 1802 together. The bus architecture may also link various other circuits such as a peripheral device, a voltage stabilizer and a power management circuit, which are well-known in the art and therefore, will not be further described herein. A bus interface provides an interface. The processor 1801 is responsible for managing a bus architecture and general processing, and the memory 1802 may store data used by the processor 1801 when performing operations.

Flows disclosed in the embodiments of the present disclosure may be applied to the processor 1801 or implemented by the processor 1801. In an implementing process, various steps of a signal processing flow may be completed by an integrated logic circuit of hardware in the processor 1801 or instructions of a software form. The processor 1801 may be a general-purpose processor, a digital signal processor, an application-specific integrated circuit, a fieldprogrammable gate array or another programmable logic device, discrete gate, transistor logic device and discrete hardware component and may implement or perform the methods, steps and logic block diagrams disclosed in the embodiments of the present disclosure. The general-purpose processor may be a microprocessor or any conventional processor. The steps of the methods disclosed by the embodiments of the present disclosure may be directly embodied by being performed and completed by a hardware processor, or performed and completed by a combination of hardware and software modules in the processor. The software module may be located in a storage medium mature in the art such as a random access memory, a flash memory, a read-only memory, a programmable read-only memory or an electrically erasable programmable memory and a register. The storage medium is located in the memory 1802, and the processor 1801 reads information in the memory 1802, and completes steps of the signal processing flow in combination with hardware.

Specifically, the processor 1801 is configured to read computer instructions in the memory 1802 and implement, when executing the computer instructions:

performing ATA and/or AFA according to notification signaling transmitted by a network-side device; wherein the notification signaling includes indication information for indicating the terminal to perform the ATA and/or AFA; and controlling the transceiver to transmit time information of the ATA and/or AFA performed by the terminal to an LMF; wherein the time information of the ATA and/or AFA is used to determine a position of the terminal.

In some embodiments, the transceiver 1803 is specifically configured to:

transmit a report that the terminal supports performing the ATA and/or AFA within a valid adjustment window (VAW) to the network-side device; or

transmit a report to the network-side device that the terminal supports performing the ATA and/or AFA according to a predefined rule; and

receive the notification signaling transmitted by the network-side device.

In some embodiments, the processor 1801 is specifically configured to:
perform the ATA and/or AFA within a time range of the VAW based on that a time range of the VAW indicated by a VAW configuration parameter does not coincide with a signal processing time range; wherein the signal processing time range refers to a time range of processing a positioning reference signal.

In some embodiments, the processor 1801 is specifically configured to:
perform the ATA and/or AFA within the time range of VAW according to a priority relationship between the VAW and the positioning reference signal based on that the time range of the VAW indicated by the VAW configuration parameter coincides partially or completely with the signal processing time range.

In some embodiments, the processor 1801 is specifically configured to:

perform the ATA and/or AFA at a first moment based on that a priority of the VAW is higher than a priority of the positioning reference signal, wherein the first moment is any moment within the time range of VAW; and

perform the ATA and/or AFA at any moment within the time range of VAW except a second moment based on that the priority of the VAW is lower than the priority of the positioning reference signal, wherein the second moment is a moment of processing the positioning reference signal by the terminal.

In some embodiments, the indication information included in the notification signaling includes the predefined rule; the predefined rule indicates that the terminal does not perform the ATA and/or AFA within the signal processing time range and performs the ATA and/or AFA after the positioning reference signal is processed; wherein the signal processing time range refers to a time range of processing the positioning reference signal.

In some embodiments, the positioning reference signal is a downlink positioning reference signal (DL PRS), and the signal processing time range is a time range of an MG or a PPW determined according to a resource configuration parameter of the DL PRS transmitted by the LMF; processing the positioning reference signal refers to receiving the DL PRS transmitted by a base station and performing a measurement; or

the positioning reference signal is a UL SRS-Pos, and the signal processing time range is determined according to a resource configuration parameter of the UL SRS-Pos transmitted by the base station; processing the positioning reference signal refers to transmitting the UL SRS-Pos to the base station; or

the positioning reference signal is an SL PRS, the terminal is a receiving terminal, and the signal processing time range is determined according to a time range of an MG or a PPW indicated in a resource configuration parameter of the SL PRS transmitted by the LMF; processing the positioning reference signal refers to receiving the SL PRS transmitted by a transmitting terminal and performing a measurement; or

the positioning reference signal is the SL PRS, the terminal is the transmitting terminal, and the signal processing time range is determined according to a resource configuration parameter of the SL PRS transmitted by the base station; and processing the positioning reference signal refers to transmitting the SL PRS to the receiving terminal.

In some embodiments, the notification signaling is LPP signaling transmitted by the LMF; or
the notification signaling is RRC signaling, MAC CE signaling or DCI signaling transmitted by the base station.

Exemplarily, the network-side device may be but is not limited to the base station, the LMF and other entities or devices.

Based on the same technical concept, the embodiments of the present disclosure further provides a base station. The base station can perform any method for positioning the terminal implemented in the above embodiments.

FIG. 19 shows a schematic structural diagram of the base station provided by the embodiments of the present disclosure, which means that showing another schematic structural diagram of the network-side device. As shown in FIG. 19, the network-side device comprises a processor 1901, a memory 1902 and a transceiver 1903.

The processor 1901 is responsible for managing a bus architecture and general processing, and the memory 1902 may store data used by the processor 1901 when performing operations. The transceiver 1903 is configured to receive and transmit data under control of the processor 1901.

The bus architecture may comprise any quantity of interconnected buses and bridges, specifically, linking various circuits of one or more processors represented by the processor 1901 and a memory represented by the memory 1902 together. The bus architecture may also link various other circuits such as a peripheral device, a voltage stabilizer and a power management circuit, which are well-known in the art and therefore, will not be further described herein. A bus interface provides an interface. The processor 1901 is responsible for managing a bus architecture and general processing, and the memory 1902 may store data used by the processor 1901 when performing operations.

Flows disclosed in the embodiments of the present disclosure may be applied to the processor 1901 or implemented by the processor 1901. In an implementing process, various steps of a signal processing flow may be completed by an integrated logic circuit of hardware in the processor 1901 or instructions of a software form. The processor 1901 may be a general-purpose processor, a digital signal processor, an application-specific integrated circuit, a fieldprogrammable gate array or another programmable logic device, discrete gate, transistor logic device and discrete hardware component and may implement or perform the methods, steps and logic block diagrams disclosed in the embodiments of the present disclosure. The general-purpose processor may be a microprocessor or any conventional processor. The steps of the methods disclosed by the embodiments of the present disclosure may be directly embodied by being performed and completed by a hardware processor, or performed and completed by a combination of hardware and software modules in the processor. The software module may be located in a storage medium mature in the art such as a random access memory, a flash memory, a read-only memory, a programmable read-only memory or an electrically erasable programmable memory and a register. The storage medium is located in the memory 1902, and the processor 1901 reads information in the memory 1902, and completes steps of the signal processing flow in combination with hardware.

Specifically, the processor 1901 is configured to read a computer program in the memory 1902 and implement, when executing the computer program:

controlling the transceiver 1903 to receive a terminal capability report transmitted by a first terminal; wherein the terminal capability report represents that the first terminal supports performing ATA and/or AFA within a valid adjustment window (VAW) or supports performing the ATA and/or AFA according to a predefined rule; and transmitting notification signaling to the first terminal; wherein the notification signaling is used to indicate the first terminal to perform the ATA and/or AFA.

In some embodiments, the notification signaling includes a VAW configuration parameter and a priority type parameter; the priority type parameter is used to indicate a priority relationship between the VAW and a DL PRS; or the notification signaling includes the predefined rule, the predefined rule indicates that the first terminal does not perform the ATA and/or AFA within a signal processing time range and performs the ATA and/or AFA after a positioning reference signal is processed; and the positioning reference signal is a DL PRS, a UL SRS-Pos or an SL PRS.

In some embodiments, the base station includes a serving base station and a neighbor base station.

In some embodiments, the notification signaling is RRC signaling, MAC CE signaling or DCI signaling.

Based on the same technical concept, the embodiments of the present disclosure further provides an LMF. The LMF can perform any method for positioning the terminal implemented in the above embodiments.

FIG. 20 shows a schematic structural diagram of the LMF provided by the embodiments of the present disclosure, which means that showing another schematic structural diagram of the LMF. As shown in FIG. 20, the LMF comprises a processor 2001, a memory 2002 and a transceiver 2003.

The processor 2001 is responsible for managing a bus architecture and general processing, and the memory 2002 may store data used by the processor 2001 when performing operations. The transceiver 2003 is configured to receive and transmit data under control of the processor 2001.

The bus architecture may comprise any quantity of interconnected buses and bridges, specifically, linking various circuits of one or more processors represented by the processor 2001 and a memory represented by the memory 2002 together. The bus architecture may also link various other circuits such as a peripheral device, a voltage stabilizer and a power management circuit, which are well-known in the art and therefore, will not be further described herein. A bus interface provides an interface. The processor 2001 is responsible for managing a bus architecture and general processing, and the memory 2002 may store data used by the processor 2001 when performing operations.

Flows disclosed in the embodiments of the present disclosure may be applied to the processor 2001 or implemented by the processor 2001. In an implementing process, various steps of a signal processing flow may be completed by an integrated logic circuit of hardware in the processor 2001 or instructions of a software form. The processor 2001 may be a general-purpose processor, a digital signal processor, an application-specific integrated circuit, a fieldprogrammable gate array or another programmable logic device, discrete gate, transistor logic device and discrete hardware component and may implement or perform the methods, steps and logic block diagrams disclosed in the embodiments of the present disclosure. The general-purpose processor may be a microprocessor or any conventional processor. The steps of the methods disclosed by the embodiments of the present disclosure may be directly embodied by being performed and completed by a hardware processor, or performed and completed by a combination of hardware and software modules in the processor. The software module may be located in a storage medium mature in the art such as a random access memory, a flash memory, a read-only memory, a programmable read-only memory or an electrically erasable programmable memory and a register. The storage medium is located in the memory 2002, and the processor 2001 reads information in the memory 2002, and completes steps of the signal processing flow in combination with hardware.

Specifically, the processor 2001 is configured to read a computer program in the memory 2002 and implement, when executing the computer program:

controlling the transceiver 2003 to receive time information of ATA and/or AFA performed by the first terminal transmitted by the first terminal; and

determining a position of the first terminal based on the time information of the ATA and/or AFA.

In some embodiments, the processor 2001 is specifically configured to:

determine a time range between two adjacent ATA and/or AFA performed by the first terminal based on the time information of the ATA and/or AFA; and

determine the position of the first terminal according to various positioning measurements of the first terminal obtained within the time range; wherein the positioning measurements are obtained by measuring a positioning reference signal corresponding to the first terminal.

In some embodiments, the transceiver 2003 may further be configured to:

receive a terminal capability report transmitted by the first terminal; wherein the terminal capability report represents that the first terminal supports performing the ATA and/or AFA within a valid adjustment window (VAW) or supports performing the ATA and/or AFA according to a predefined rule; and

transmit notification signaling; wherein the notification signaling is used to indicate the first terminal to perform the ATA and/or AFA.

In some embodiments, the notification signaling is long-term-evolution positioning protocol (LPP) signaling.

In some embodiments, the notification signaling includes a VAW configuration parameter and a priority type parameter; the priority type parameter is used to indicate a priority relationship between the VAW and a DL PRS; or the notification signaling includes the predefined rule, the predefined rule indicates that the first terminal does not perform the ATA and/or AFA within a signal processing time range and performs the ATA and/or AFA after a positioning reference signal is processed; wherein the signal processing time range refers to a time range of processing the positioning reference signal.

In some embodiments, the positioning reference signal is a downlink positioning reference signal (DL PRS), a positioning measurement is a reference signal time difference (RSTD), a time difference between transmitting and receiving of the terminal, a downlink phase of arrival (POA) value, or a downlink phase difference of arrival (PDOA) transmitted by the first terminal; or

the positioning reference signal is an uplink sounding reference signal for positioning (UL SRS-Pos), and the positioning measurement is an uplink relative time of arrival (RTOA), a time difference between transmitting and receiving of a base station, an uplink POA, or an uplink PDOA transmitted by a base station; or

the positioning reference signal is a sidelink positioning reference signal (SL PRS), the first terminal is a receiving terminal, and the positioning measurement is a time difference of arrival (TDOA), a time difference between transmitting and receiving of the receiving terminal, an SL POA, or an SL PDOA transmitted by the first terminal; or

the positioning reference signal is the SL PRS, the first terminal is a transmitting terminal, and the positioning measurement is a time difference between transmitting and receiving of the first terminal.

In some embodiments, the processor 2001 may further be configured to:

receive a positioning measurement and quality information of the positioning measurement obtained by measuring the DL PRS and transmitted by the first terminal.

In some embodiments, the processor 2001 may further be configured to:

receive a positioning measurement and quality information of the positioning measurement obtained by measuring the SL PRS and transmitted by the first terminal.

In some embodiments, the quality information includes a signal-to-noise ratio (SNR), a signal-to-interference and noise ratio (SINR) or a variance of a measurement error.

Those skilled in the art should understand that the embodiments of the present disclosure may be provided as a method, system, or computer program product. Thus, the present disclosure may be in a form of complete hardware embodiment, complete software embodiment or software and hardware combined embodiment. Besides, the present disclosure may adopt a form of a computer program product implemented on one or more computer applicable storage media (including but not limited to a disk memory, a CD-ROM, an optical memory and the like) including a computer applicable program code.

The present disclosure is described with reference to flowcharts and/or block diagrams of the method, the device (system), and the computer program product according to the present disclosure. It is to be understood that each flow and/or block in the flowcharts and/or block diagrams as well as a combination of flows and/or blocks in the flowcharts and/or block diagrams may be implemented through computer program instructions. These computer program instructions may be provided for a processor of a general-purpose computer, a special-purpose computer, an embedded processor or another programmable data processing device so as to generate a machine, so that an apparatus for implementing functions specified in one or more flows in the flowcharts and/or one or more blocks in the block diagrams is generated through instructions executed by the processor of the computer or another programmable data processing device.

These computer program instructions may also be stored in a computer-readable memory capable of guiding a computer or another programmable data processing device to work in a specific mode, so that the instructions stored in the computer-readable memory generate a manufacture including an instruction apparatus, and the instruction apparatus implements the functions specified in one or more flows in the flowcharts and/or one or more blocks in the block diagrams.

These computer program instructions may also be loaded to a computer, another programmable data processing device, so that a series of operating steps may be performed on the computer or another programmable device to produce a computer-implemented processing, such that the instructions executed on the computer or the another programmable device provide steps for implementing the functions specified in one or more flows in the flowcharts and/or one or more blocks in the block diagrams.

Apparently, those skilled in the art may make various modifications and variations to the present disclosure without departing from the spirit and scope of the present disclosure. In this case, if these modifications and variations of the present disclosure fall within the scope of the claims of the present disclosure and their equivalents, the present disclosure is also intended to include these modifications and variations.

**Claims**

1. A method for positioning a terminal, applied to a terminal, **characterized by** comprising:

   performing autonomous time adjustment (ATA) and/or autonomous frequency adjustment (AFA) according to notification signaling transmitted by a network-side device; wherein the notification signaling includes indication information for indicating the terminal to perform the ATA and/or AFA; and
   transmitting time information of the ATA and/or AFA performed by the terminal, wherein the time information of the ATA and/or AFA is used to determine a position of the terminal.

2. The method according to claim 1, **characterized in that** before performing the autonomous time adjustment (ATA) and/or autonomous frequency adjustment (AFA) according to the notification signaling transmitted by the network-side device, the method further comprises:

   transmitting a report to the network-side device that the terminal supports performing the ATA and/or AFA within a valid adjustment window (VAW), and receiving the notification signaling transmitted by the network-side device; or
   transmitting a report to the network-side device that the terminal supports performing the ATA and/or AFA according to a predefined rule, and receiving the notification signaling transmitted by the network-side device.

3. The method according to claim 2, **characterized in that** the indication information included in the notification signaling includes a VAW configuration parameter; and performing the ATA and/or AFA according to the notification signaling transmitted by the network-side device comprises:
   based on that a time range of a VAW indicated by the VAW configuration parameter does not coincide with a signal processing time range, performing the ATA and/or AFA within the time range of the VAW; wherein the signal processing time range refers to a time range of processing a positioning reference signal.

4. The method according to claim 3, **characterized in that** the indication information included in the notification signaling further includes a priority type parameter; the priority type parameter is used to indicate a priority relationship between the VAW and the positioning reference signal; and performing the ATA and/or AFA according to the notification signaling transmitted by the network-side device further comprises:
   based on that the time range of the VAW indicated by the VAW configuration parameter coincides partially or completely with the signal processing time range, performing the ATA and/or AFA within the time range of the VAW according to the priority relationship between the VAW and the positioning reference signal.

5. The method according to claim 4, **characterized in that** performing the ATA and/or AFA within the time range of VAW according to the priority relationship between the VAW and the positioning reference signal comprises:

based on that a priority of the VAW is higher than a priority of the positioning reference signal, performing the ATA and/or AFA at a first moment, wherein the first moment is any moment within the time range of VAW; and based on that the priority of the VAW is lower than the priority of the positioning reference signal, performing the ATA and/or AFA at any moment within the time range of VAW except a second moment, wherein the second moment is a moment of processing the positioning reference signal by the terminal.

6. The method according to claim 2, **characterized in that** the indication information included in the notification signaling includes the predefined rule; the predefined rule indicates that the terminal does not to perform the ATA and/or AFA within a signal processing time range and performs the ATA and/or AFA after the positioning reference signal is processed; wherein the signal processing time range refers to a time range of processing the positioning reference signal.

7. The method according to any one of claims 3 to 6, **characterized in that** the positioning reference signal is a downlink positioning reference signal (DL PRS), and the signal processing time range is a time range of a measurement gap (MG) or a downlink positioning reference signal processing window (PPW) determined according to a resource configuration parameter of the DL PRS transmitted by an LMF; processing the positioning reference signal refers to receiving the DL PRS transmitted by a base station and performing a measurement; or

the positioning reference signal is an uplink sounding reference signal for positioning (UL SRS-Pos), and the signal processing time range is determined according to a resource configuration parameter of the UL SRS-Pos transmitted by the base station; processing the positioning reference signal refers to transmitting the UL SRS-Pos to the base station; or the positioning reference signal is a sidelink positioning reference signal (SL PRS), the terminal is a receiving terminal, the signal processing time range is determined according to an MG or the time range of the PPW indicated in a resource configuration parameter of the SL PRS transmitted by the LMF; processing the positioning reference signal refers to receiving the SL PRS transmitted by a transmitting terminal and performing a measurement; or the positioning reference signal is the SL PRS, the terminal is the transmitting terminal, and the signal processing time range is determined according to a resource configuration parameter of the SL PRS transmitted by the base station; and processing the positioning reference signal refers to transmitting the SL PRS to the receiving terminal.

8. The method according to any one of claims 1 to 6, **characterized in that** the notification signaling is long-term-evolution positioning protocol (LPP) signaling transmitted by a location management function (LMF); or the notification signaling is radio resource control (RRC) signaling, media access control-control element (MAC CE) signaling or downlink control information (DCI) signaling transmitted by the base station.

9. A method for positioning a terminal, applied to a base station, **characterized by** comprising:

receiving a terminal capability report transmitted by a first terminal; wherein the terminal capability report represents that the first terminal supports performing ATA and/or AFA within a VAW or supports performing the ATA and/or AFA according to a predefined rule; and transmitting notification signaling; wherein the notification signaling is used to indicate the first terminal to perform the ATA and/or AFA.

10. The method according to claim 9, **characterized in that** the notification signaling includes a VAW configuration parameter and a priority type parameter; the priority type parameter is used to indicate a priority relationship between the VAW and a DL PRS; or the notification signaling includes the predefined rule, the predefined rule indicates that the first terminal does not perform the ATA and/or AFA within a signal processing time range and performs the ATA and/or AFA after a positioning reference signal is processed; wherein the positioning reference signal is a DL PRS, a UL SRS-Pos or an SL PRS, and the signal processing time range refers to a time range of processing the positioning reference signal.

11. The method according to claim 9 or 10, **characterized in that** the base station comprises a serving base station and a neighbor base station.

12. The method according to claim 9 or 10, **characterized in that** the notification signaling is RRC signaling, MAC CE signaling or DCI signaling.

13. A method for positioning a terminal, applied to an LMF, **characterized by** comprising:

    receiving time information of the ATA and/or AFA performed by a first terminal transmitted by the first terminal; and
    determining a position of the first terminal based on the time information of the ATA and/or AFA.

14. The method according to claim 13, **characterized in that** determining the position of the first terminal based on the time information of the ATA and/or AFA comprises:

    determining a time range between two adjacent ATA and/or AFA performed by the first terminal based on the time information of the ATA and/or AFA; and
    determining the position of the first terminal according to various positioning measurements of the first terminal obtained within the time range; wherein the positioning measurements are obtained by measuring a positioning reference signal corresponding to the first terminal.

15. The method according to claim 13, **characterized in that** before receiving the time information of the ATA and/or AFA performed by the first terminal transmitted by the first terminal, the method further comprises:

    receiving a terminal capability report transmitted by the first terminal; wherein the terminal capability report represents that the first terminal supports performing the ATA and/or AFA within a VAW or supports performing the ATA and/or AFA according to a predefined rule; and
    transmitting notification signaling; wherein the notification signaling is used to indicate the first terminal to perform the ATA and/or AFA.

16. The method according to claim 15, **characterized in that** the notification signaling is LPP signaling.

17. The method according to claim 15, **characterized in that** the notification signaling includes a VAW configuration parameter and a priority type parameter; the priority type parameter is used to indicate a priority relationship between the VAW and a DL PRS; or
    the notification signaling includes the predefined rule, the predefined rule indicates that the first terminal does not perform the ATA and/or AFA within a signal processing time range and performs the ATA and/or AFA after a positioning reference signal is processed; wherein the signal processing time range refers to a time range of processing the positioning reference signal.

18. The method according to claim 17, **characterized in that** the positioning reference signal is a DL PRS, a positioning measurement is a reference signal time difference (RSTD), a time difference between transmitting and receiving of the terminal, a downlink phase of arrival (POA), or a downlink phase difference of arrival (PDOA) transmitted by the first terminal; or

    the positioning reference signal is a UL SRS-Pos, and the positioning measurement is an uplink relative time of arrival (RTOA), a time difference between transmitting and receiving of a base station, an uplink POA, or an uplink PDOA transmitted by a base station; or
    the positioning reference signal is an SL PRS, the first terminal is a receiving terminal, and the positioning measurement is a time difference of arrival (TDOA), a time difference between transmitting and receiving of the receiving terminal, an SL POA, or an SL PDOA transmitted by the first terminal; or
    the positioning reference signal is the SL PRS, the first terminal is a transmitting terminal, and the positioning measurement is a time difference between transmitting and receiving of the first terminal.

19. The method according to claim 18, **characterized in that** based on that the positioning reference signal is the DL PRS, the method further comprises:
    receiving a positioning measurement and quality information of the positioning measurement obtained by measuring the DL PRS and transmitted by the first terminal.

20. The method according to claim 18, **characterized in that** based on that the positioning reference signal is the SL PRS and the first terminal is the receiving terminal, the method further comprises:
receiving a positioning measurement and quality information of the positioning measurement obtained by measuring the SL PRS and transmitted by the first terminal.

21. The method according to claim 19 or 20, **characterized in that** the quality information includes a signal-to-noise ratio (SNR), a signal-to-interference and noise ratio (SINR) or a variance of a measurement error.

22. A terminal, **characterized by** comprising:

an adjusting unit, configured to perform ATA and/or AFA according to notification signaling transmitted by a network-side device; wherein the notification signaling includes indication information for indicating the terminal to perform the ATA and/or AFA; and
a first transmitting unit, configured to transmit time information of the ATA and/or AFA performed by the terminal; wherein the time information of the ATA and/or AFA is used to determine a position of the terminal.

23. A base station, **characterized by** comprising:

a first receiving unit, configured to receive a terminal capability report transmitted by a first terminal; wherein the terminal capability report represents that the first terminal supports performing ATA and/or AFA within a VAW or supports performing the ATA and/or AFA according to a predefined rule; and
a second transmitting unit, configured to transmit notification signaling; wherein the notification signaling is used to indicate the first terminal to perform the ATA and/or AFA.

24. An LMF, **characterized by** comprising:

a second receiving unit, configured to receive time information of ATA and/or AFA performed by the first terminal transmitted by the first terminal; and
a determining unit, configured to determine a position of the first terminal based on the time information of the ATA and/or AFA.

25. A terminal, **characterized by** comprising: a memory, a transceiver and a processor;

wherein the memory is configured to store computer instructions;
the transceiver is configured to transceive data under control of the processor; and
the processor is configured to read a computer program in the memory and perform:

performing ATA and/or AFA according to notification signaling transmitted by a network-side device; wherein the notification signaling includes indication information for indicating the terminal to perform the ATA and/or AFA; and
controlling the transceiver to transmit time information of the ATA and/or AFA performed by the terminal; wherein the time information of the ATA and/or AFA is used to determine a position of the terminal.

26. The terminal according to claim 25, **characterized in that** the transceiver is further configured to:

transmit a report to the network-side device that the terminal supports performing the ATA and/or AFA within a VAW, and receive the notification signaling transmitted by the network-side device; or
transmit a report to the network-side device that the terminal supports performing the ATA and/or AFA according to a predefined rule, and receive the notification signaling transmitted by the network-side device.

27. The terminal according to claim 26, **characterized in that** the indication information included in the notification signaling includes a VAW configuration parameter; and the processor is configured to:
based on that the time range of a VAW indicated by the VAW configuration parameter does not coincide with a signal processing time range, perform the ATA and/or AFA within a time range of the VAW; wherein the signal processing time range refers to a time range of processing a positioning reference signal.

28. The terminal according to claim 27, **characterized in that** the indication information included in the notification signaling further includes a priority type parameter; the priority type parameter is used to indicate a priority relationship between the VAW and the positioning reference signal; and the processor is further configured to:
perform the ATA and/or AFA within the time range of VAW according to the priority relationship between the VAW and the positioning reference signal based on that the time range of the VAW indicated by the VAW configuration parameter coincides partially or completely with the signal processing time range.

29. The terminal according to claim 28, **characterized in that** the processor is configured to:

perform the ATA and/or AFA at a first moment based on that a priority of the VAW is higher than a priority of the positioning reference signal, wherein the first moment is any moment within the time range of VAW; and
perform the ATA and/or AFA at any moment within the time range of VAW except a second moment based on that the priority of the VAW is lower than the priority of the positioning reference signal, wherein the second moment is a moment of processing the positioning reference signal by the terminal.

30. The terminal according to claim 26, **characterized in that** the indication information included in the notification signaling includes the predefined rule; the predefined rule indicates that the terminal does not to perform the ATA and/or AFA within a signal processing time range and performs the ATA and/or AFA after the positioning reference signal is processed; wherein the signal processing time range refers to a time range of processing the positioning reference signal.

31. The terminal according to any one of claims 27 to 30, **characterized in that** the positioning reference signal is a DL PRS, and the signal processing time range is a time range of an MG or a PPW determined according to a resource configuration parameter of the DL PRS transmitted by an LMF; processing the positioning reference signal refers to receiving the DL PRS transmitted by a base station and performing a measurement; or

the positioning reference signal is a UL SRS-Pos, and the signal processing time range is determined according to a resource configuration parameter of the UL SRS-Pos transmitted by the base station; processing the positioning reference signal refers to transmitting the UL SRS-Pos to the base station; or
the positioning reference signal is an SL PRS, the terminal is a receiving terminal, and the signal processing time range is determined according to a time range of an MG or a PPW indicated in a resource configuration parameter of the SL PRS transmitted by the LMF; processing the positioning reference signal refers to receiving the SL PRS transmitted by a transmitting terminal and performing a measurement; or
the positioning reference signal is the SL PRS, the terminal is the transmitting terminal, and the signal processing time range is determined according to a resource configuration parameter of the SL PRS transmitted by the base station; and processing the positioning reference signal refers to transmitting the SL PRS to the receiving terminal.

32. The terminal according to any one of claims 25 to 30, **characterized in that** the notification signaling is LPP signaling transmitted by an LMF; or
the notification signaling is RRC signaling, MAC CE signaling or DCI signaling transmitted by a base station.

33. A base station, **characterized by** comprising: a memory, a transceiver and a processor;

wherein the memory is configured to store computer instructions;
the transceiver is configured to receive a terminal capability report transmitted by a first terminal under control of the processor; wherein the terminal capability report represents that the first terminal supports performing ATA and/or AFA within a VAW or supports performing the ATA and/or AFA according to a predefined rule; and transmit notification signaling; wherein the notification signaling is used to indicate the first terminal to perform the ATA and/or AFA.

34. The base station according to claim 33, **characterized in that** the notification signaling includes a VAW configuration parameter and a priority type parameter; the priority type parameter is used to indicate a priority relationship between the VAW and a DL PRS; or
the notification signaling includes the predefined rule, the predefined rule indicates that the first terminal does not perform the ATA and/or AFA within a signal processing time range and performs the ATA and/or AFA after a positioning reference signal is processed; the positioning reference signal is a DL PRS, a UL SRS-Pos or an SL PRS; and the signal processing time range refers to a time range of processing the positioning reference signal.

35. The base station according to claim 33 or 34, **characterized in that** the base station comprises a serving base station and a neighbor base station.

36. The base station according to claim 33 or 34, **characterized in that** the notification signaling is RRC signaling, MAC CE signaling or DCI signaling.

37. An LMF, **characterized by** comprising: a memory, a transceiver and a processor;

wherein the memory is configured to store computer instructions;
the transceiver is configured to transceive data under control of the processor; and
the processor is configured to read a computer program in the memory and perform the following steps:

controlling the transceiver to receive time information of ATA and/or AFA performed by the first terminal transmitted by the first terminal; and
determining a position of the first terminal based on the time information of the ATA and/or AFA.

38. The LMF according to claim 37, **characterized in that** the processor is configured to:

determine a time range between two adjacent ATA and/or AFA performed by the first terminal based on the time information of the ATA and/or AFA; and
determine the position of the first terminal according to various positioning measurements of the first terminal obtained within the time range; wherein the positioning measurements are obtained by measuring a positioning reference signal corresponding to the first terminal.

39. The LMF according to claim 37, **characterized in that** the transceiver is further configured to:

receive a terminal capability report transmitted by the first terminal; wherein the terminal capability report represents that the first terminal supports performing the ATA and/or AFA within a VAW or supports performing the ATA and/or AFA according to a predefined rule; and
transmit notification signaling; wherein the notification signaling is used to indicate the first terminal to perform the ATA and/or AFA.

40. The LMF according to claim 39, **characterized in that** the notification signaling is LPP signaling.

41. The LMF according to claim 39, **characterized in that** the notification signaling includes a VAW configuration parameter and a priority type parameter; the priority type parameter is used to indicate a priority relationship between the VAW and a DL PRS; or
the notification signaling includes the predefined rule, the predefined rule indicates that the first terminal does not perform the ATA and/or AFA within a signal processing time range and performs the ATA and/or AFA after a positioning reference signal is processed; wherein the signal processing time range refers to a time range of processing the positioning reference signal.

42. The LMF according to claim 41, **characterized in that** the positioning reference signal is a DL PRS, a positioning measurement is an RSTD, a time difference between transmitting and receiving of the terminal, a downlink POA, or a downlink PDOA transmitted by the first terminal; or

the positioning reference signal is a UL SRS-Pos, and the positioning measurement is an uplink RTOA, a time difference between transmitting and receiving of a base station, an uplink POA, or an uplink PDOA transmitted by a base station; or
the positioning reference signal is an SL PRS, the first terminal is a receiving terminal, and the positioning measurement is a TDOA, a time difference between transmitting and receiving of the receiving terminal, an SL POA, or an SL PDOA transmitted by the first terminal; or
the positioning reference signal is the SL PRS, the first terminal is a transmitting terminal, and the positioning measurement is a time difference between transmitting and receiving of the first terminal.

43. The LMF according to claim 42, **characterized in that** the processor is further configured to:
receive a positioning measurement and quality information of the positioning measurement obtained by measuring the DL PRS and transmitted by the first terminal.

44. The LMF according to claim 42, **characterized in that** the processor is further configured to:
receive a positioning measurement and quality information of the positioning measurement obtained by measuring the SL PRS and transmitted by the first terminal.

45. The LMF according to claim 43 or 44, **characterized in that** the quality information includes an SNR, an SINR or a variance of a measurement error.

46. A computer-readable storage medium, storing computer instructions, **characterized in that** the computer instructions, when performed by a processor, implement the method according to any one of claims 1 to 8.

47. A computer-readable storage medium, storing computer instructions, **characterized in that** the computer instructions, when performed by a processor, implement the method according to any one of claims 9 to 12.

48. A computer-readable storage medium, storing computer instructions, **characterized in that** the computer instructions, when performed by a processor, implement the method according to any one of claims 13 to 21.

**FIG. 1**

**FIG. 2**

**FIG. 3**

**FIG. 4**

**FIG. 5**

Network-side Device

Terminal a | Base Station | LMF

S601: transmitting a terminal capability report

S602: transmitting notification signaling

S603

perfoming ATA and/or AFA according to the notification signaling tranmistted by the netwrok-side device

S604

measuring a UL SRS-Pos to obtain an uplink positioning measurement quantity

S605:tranmitting the uplink potisioning measurement quantity

S606: transmitting time information of the ATA and/or AFA

S607

determining a position of the terminal a

**FIG. 6**

| | Slot#1 | Slot#2 | |
|---|---|---|---|

**FIG. 7**

Network-side Device

Receiving
Terminal a

Base
Station

LMF

S801: transmitting a terminal capability
report

S802: transmitting notification signaling

S803

perfoming ATA and/or AFA according
to the notification signaling tranmistted
by the netwrok-side device

S804: transmitting time information of
the ATA and/or AFA

S805

determining a position of
the receiving terminal a

**FIG. 8**

Network-side Device

Transmitting
Terminal b

Base Station

LMF

Receiving
Terminal a

S901: transmitting a terminal
capability report

S902: transmitting
notification signaling

S903

perfoming ATA and/or AFA
according to the notification
signaling tranmistted by the
netwrok-side device

S904

measuring a SL SRS to obtain
a sidelink positioning
measurement quantity

S905:tranmitting the
sidelink potisioning
measurement quantity

S906: transmitting time
information of the ATA
and/or AFA

S907

determining a position of
the transmitting terminal b

**FIG. 9**

**FIG. 10**

| UE1 | Slot#3 | Slot#4 | Slot#5 | Slot#6 |
|-----|--------|--------|--------|--------|

Perform, by UE1, ATA and/or AFA          Transmit, by the UE1, SRS-Pos1

| UE2 | Slot#3 | Slot#4 | Slot#5 | Slot#6 |
|-----|--------|--------|--------|--------|

Perform, by UE2, ATA and/or AFA          Transmit, by the UE2, SRS-Pos2

**FIG. 11**

S1201

perfoming ATA and/or AFA according to the notification signaling tranmistted by the netwrok-side device

S1202

transmitting time information of the ATA and/or AFA performed by a terminal

**FIG. 12**

S1301

receiving a terminal capability report transmitted by a first terminal

S1302

tranmitting notification signaling

**FIG. 13**

S1401

receiving time information of ATA and/or AFA performed by a first terminal transmitted by the first terminal

S1402

determining a position of the first terminal based on the time information of the ATA and/or AFA

**FIG. 14**

1501

adjusting unit

1502

first transmitting unit

**FIG. 15**

1601

first receiving unit

1602

second transmitting unit

**FIG. 16**

1701

second receiving unit

1702

determining unit

**FIG. 17**

1801
processor

1802
memory

1803
transceiver

bus interface

**FIG. 18**

1901
processor

1902
memory

1903
transceiver

bus interface

**FIG. 19**

2001
processor

2002
memory

2003
transceiver

bus interface

**FIG. 20**

## INTERNATIONAL SEARCH REPORT

| International application No. |
| --- |
| **PCT/CN2023/089168** |

| A. | CLASSIFICATION OF SUBJECT MATTER |
| --- | --- |

H04W 4/02(2018.01)i

According to International Patent Classification (IPC) or to both national classification and IPC

| B. | FIELDS SEARCHED |
| --- | --- |

Minimum documentation searched (classification system followed by classification symbols)

IPC:H04W,H04Q,H04M,H04L

Documentation searched other than minimum documentation to the extent that such documents are included in the fields searched

Electronic data base consulted during the international search (name of data base and, where practicable, search terms used)

CNTXT; CNABS; ENTXT; VEN; WPABS; DWPI; CNKI; 3GPP: 终端, 定位, 自动定时偏差控制, ATA, AFA, 通知, 信令, 指示信息, 时间信息, 位置, 调整, 时间窗, 重合, 优先级, terminal, positioning, ATA, AFA, notification, signaling, indication information, time information, location, adjustment, time window, coincidence, priority

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 102045839 A (DATANG MOBILE COMMUNICATIONS EQUIPMENT CO., LTD.) 04 May 2011 (2011-05-04) description, paragraphs [0036]-[0126] | 1-48 |
| A | CN 110113122 A (HUAWEI TECHNOLOGIES CO., LTD.) 09 August 2019 (2019-08-09) entire document | 1-48 |
| A | CN 113141648 A (DATANG MOBILE COMMUNICATIONS EQUIPMENT CO., LTD.) 20 July 2021 (2021-07-20) entire document | 1-48 |
| A | JP 2006229285 A (SEIKO EPSON CORP.) 31 August 2006 (2006-08-31) entire document | 1-48 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **04 August 2023** | **04 August 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
**Information on patent family members**

International application No.

**PCT/CN2023/089168**

| Patent document cited in search report | | | Publication date (day/month/year) | Patent family member(s) | | | Publication date (day/month/year) |
|---|---|---|---|---|---|---|---|
| CN | 102045839 | A | 04 May 2011 | None | | | |
| CN | 110113122 | A | 09 August 2019 | EP | 3737169 | A1 | 11 November 2020 |
| | | | | EP | 3737169 | A4 | 17 March 2021 |
| | | | | WO | 2019149100 | A1 | 08 August 2019 |
| | | | | US | 2020383073 | A1 | 03 December 2020 |
| | | | | US | 11564184 | B2 | 24 January 2023 |
| | | | | BR | 112020015522 | A2 | 02 February 2021 |
| CN | 113141648 | A | 20 July 2021 | None | | | |
| JP | 2006229285 | A | 31 August 2006 | JP | 4577036 | B2 | 10 November 2010 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210459542X